(19) Europäisches Patentamt
European Patent Office
Office européen des brevets

(11)  **EP 4 181 034 A1**

(12)  **EUROPEAN PATENT APPLICATION**
published in accordance with Art. 153(4) EPC

(43) Date of publication:
**17.05.2023  Bulletin 2023/20**

(21) Application number: **21837057.5**

(22) Date of filing: **01.07.2021**

(51) International Patent Classification (IPC):
**G06N 99/00** $^{(2019.01)}$

(52) Cooperative Patent Classification (CPC):
**G06N 99/00**

(86) International application number:
**PCT/JP2021/024899**

(87) International publication number:
**WO 2022/009761 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2020  JP 2020119543**

(71) Applicant: **Sony Group Corporation**
**Minato-Ku, Tokyo, 108-0075 (JP)**

(72) Inventor: **IDE, Naoki**
**Tokyo 108-0075 (JP)**

(74) Representative: **D Young & Co LLP**
**120 Holborn**
**London EC1N 2DY (GB)**

(54)  **OPTIMIZATION PROBLEM SOLUTION AND OPTIMIZATION PROBLEM SOLUTION APPARATUS**

(57)    An optimization problem solving method according to the present disclosure includes: inputting first data from a sensor; generating an objective function for performing sparse modeling on the first data; generating a coefficient matrix related to a variable to be optimized in the objective function; transmitting the coefficient matrix to a first Ising machine that performs combinatorial optimization calculation; and generating an optimum solution of sparse modeling based on second data received from the first Ising machine.

**FIG.9**

START

INPUT OBSERVATION DATA AND OBSERVATION MATRIX — S101

ACQUIRE COEFFICIENT MATRIX OF FORMULATION OF COMBINATION OF NON-ZERO COMPONENTS OF SOLUTION — S102

TRANSMIT COEFFICIENT MATRIX TO COMBINATORIAL OPTIMIZATION MACHINE — S103

RECEIVE OPTIMIZED SOLUTION FROM COMBINATORIAL OPTIMIZATION MACHINE — S104

CALCULATE VALUE OF NON-ZERO COMPONENT OF SOLUTION — S105

RESTORE OR SYNTHESIZE DATA — S106

END

**Description**

Field

The present disclosure relates to an optimization problem solving method and an optimization problem solving device.

Background

Conventionally, a quantum-inspired computer using a quantum annealing machine using a quantum bit for an Ising spin, a complementary metal-oxide-semiconductor (CMOS) gate, a digital circuit, or the like is known as hardware that simulates an Ising model (hereinafter also referred to as an "Ising machine") in order to solve a combinatorial optimization problem (hereinafter also referred to as an "optimization problem"). In such an Ising machine, processing of converting an evaluation function has been performed in order to solve a combinatorial optimization problem. In addition, sparse modeling has been used for the processing of converting an evaluation function in such a way as to satisfy constraints in the hardware (for example, Patent Literature 1).

Citation List

Patent Literature

Patent Literature 1: JP 2019-046038 A

Summary

Technical Problem

According to the conventional technology, sparse modeling has been used to perform, on an Ising machine prepared for solving an optimization problem, processing of converting an evaluation function in such a way as to satisfy constraints of hardware.
However, a conventional algorithm is used as a method of implementing the sparse modeling used here. Originally, the sparse modeling has been widely known as an optimization problem for modeling data from a sensor or the like with as few explanatory variables as possible. However, it is also known that a method that is expected to have the highest accuracy as the method for implementing the sparse modeling is a combinatorial optimization problem that causes a combinatorial explosion, and is thus not practical. Meanwhile, in recent years, the Ising machine is in the limelight as a method of reducing a calculation time for combinatorial optimization that causes a combinatorial explosion.
Therefore, the present disclosure proposes an optimization problem solving method and an optimization problem solving device capable of appropriately generating a solution of an optimization problem in sparse modeling using an Ising machine for data from a sensor.

Solution to Problem

According to the present disclosure, an optimization problem solving method includes inputting first data from a sensor; generating an objective function for performing sparse modeling on the first data; generating a coefficient matrix related to a variable to be optimized in the objective function; transmitting the coefficient matrix to a first Ising machine that performs combinatorial optimization calculation; and generating an optimum solution of sparse modeling based on second data received from the first Ising machine.

Brief Description of Drawings

FIG. 1 is a diagram illustrating an example of a configuration of an optimization problem solving system of the present disclosure.
FIG. 2 is a block diagram of a first embodiment.
FIG. 3 is a flowchart illustrating a processing procedure related to a user interface.
FIG. 4 is a diagram illustrating an example of the user interface.
FIG. 5 is a diagram schematically illustrating an Ising model.

FIG. 6 is a diagram schematically illustrating a tunneling effect.

FIG. 7 is a conceptual diagram illustrating sparse modeling.

FIG. 8 is a conceptual diagram illustrating a determinant related to binary conversion.

FIG. 9 is a flowchart illustrating a procedure of processing of L0 sparse modeling.

FIG. 10 is a diagram illustrating an example of a program of the L0 sparse modeling.

FIG. 11 is a diagram illustrating an example of a program that generates an objective function of the Ising model.

FIG. 12 is a diagram illustrating an example of a program that generates a solution of the L0 sparse modeling.

FIG. 13 is a diagram illustrating an example of a configuration of an optimization problem solving device of the present disclosure.

FIG. 14 is a diagram illustrating an example of a configuration of an Ising machine of the present disclosure.

FIG. 15 is a flowchart illustrating a procedure of compressed sensing optimization processing.

FIG. 16 is a diagram illustrating an example of a program of the compressed sensing optimization processing.

FIG. 17 is a diagram illustrating an example of a program that generates an objective function of the Ising model.

FIG. 18 is a diagram illustrating an example of a program that obtains a measurement control matrix.

FIG. 19 is a diagram illustrating a second embodiment to which the optimization problem solving system is applied.

FIG. 20 is a diagram illustrating a fourth embodiment to which the optimization problem solving system is applied.

FIG. 21 is a diagram illustrating the fourth embodiment to which the optimization problem solving system is applied.

FIG. 22 is a diagram illustrating the fourth embodiment to which the optimization problem solving system is applied.

FIG. 23 is a diagram illustrating a fifth embodiment to which the optimization problem solving system is applied.

FIG. 24 is a hardware configuration diagram illustrating an example of a computer that implements functions of the optimization problem solving device. Description of Embodiments

Hereinafter, embodiments of the present disclosure will be described in detail with reference to the drawings. Note that an optimization problem solving method and an optimization problem solving device according to the present application are not limited by the embodiments. Further, in each of the following embodiments, the same reference signs denote the same portions, and an overlapping description will be omitted.

The present disclosure will be described in the following order.

1. Outline of Technology

    1-1. Background (Application Field or the like)
    1-2. Sparse Modeling

2. First Embodiment

    2-1. Configuration of Device of Optimization Problem Solving System
    2-2. Outline of Processing Performed by Optimization Problem Solving System
    2-2-1. Optimum Observation Dimension Selection
    2-2-2. L0 Sparse Modeling
    2-2-3. User Interface
    2-2-4. Ising Machine
    2-2-5. Sparse Modeling
    2-2-5-1. L0 Sparse Modeling and L1 Sparse Modeling
    2-2-5-2. L0 Sparse Modeling as Combinatorial Optimization Problem
    2-2-5-3. L0 Sparse Modeling Using Binary Variable
    2-2-5-4. L0 Sparse Modeling in QUBO Form
    2-2-5-5. K-bit Quantized L0 Sparse Modeling
    2-2-5-6. L0 Sparse Modeling with Ising Model
    2-2-6. Example of Flow of L0 Sparse Modeling
    2-2-7. Example of Program of L0 Sparse Modeling
    2-3. Configuration of Optimization Problem Solving Device
    2-4. Configuration of Ising Machine
    2-5. Compressed Sensing
    2-5-1. Combinatorial Optimization Problem
    2-5-2. QUBO Form
    2-5-3. Optimization of Compressed Sensing by Ising Model
    2-5-4. Example of Flow of Compressed Sensing Optimization
    2-5-5. Example of Program of Compressed Sensing Optimization

3. Other Embodiments

3-1. Second Embodiment (RFID)
3-2. Third Embodiment (Extension of Second Embodiment)
3-3. Fourth Embodiment (Target Detection)
3-4. Fifth Embodiment (Image Diagnosis)
3-5. Sixth Embodiment (Others)

4. Other Configuration Examples, etc.

4-1. Other Configuration Examples
4-2. Method of Generating Information Used for Program and Processing of Parameter and the like
4-3. Others

5. Effects According to Present Disclosure
6. Hardware Configuration

[1. Outline of Technology]

Before describing the present disclosure, an outline of a technical background according to the present disclosure will be described. In the following technical description, a description of the conventional technology will be omitted as appropriate.

[1-1. Background (Application Field or the like)]

First, application fields of sparse modeling and compressed sensing related to processing according to the present disclosure will be described. The sparse modeling and compressed sensing are used in various fields such as magnetic resonance imaging (MRI), a radio telescope, a radar, and light detection and ranging (LIDAR) (laser imaging detection and ranging).

For example, MRI is known as an early practical application of the compressed sensing. Although MRI in the early stage has a disadvantage that an imaging time is required, the imaging time is shortened by reducing the number of times the measurement is performed by the compressed sensing, which leads to a significant reduction in the burden on a patient and a medical worker.

Furthermore, for example, it is known that a detailed image of a black hole is restored by super-resolution from information obtained by a small number of radio astronomy observatories (radio astronomy observatory array) based on prior knowledge that there are few non-zero components in an image, in celestial body imaging using celestial radio wave information measured by a radio astronomy observatory. In addition, also in imaging of a surrounding environment using a radar, LIDAR, or the like, acquisition of an image with a higher resolution by super-resolution has been studied by a similar principle.

[1-2. Sparse Modeling]

Meanwhile, current sparse modeling is an approximate solution (for example, L1 sparse modeling), and in order to obtain the same solution as ideal sparse modeling (for example, L0 sparse modeling) expected to have the highest accuracy, it is necessary to satisfy a certain condition that the number of dimensions of observation and the like are difficult to calculate. Specifically, a restricted isometry property (RIP) coefficient of an observation matrix needs to satisfy a certain condition, but it is difficult to calculate the RIP coefficient.

Therefore, in the current L1 sparse modeling, equivalence with true sparse modeling is often ensured by evaluation in order. However, in the evaluation in order, it is unclear how many times of measurement may be actually reduced. That is, it is difficult to ensure whether or not an original image is actually restored by a technology such as super-resolution or data restoration. Therefore, sparse modeling in which complete data restoration is easily ensured has been required.

As such sparse modeling, for example, it is conceivable to use the L0 sparse modeling itself, optimize observation dimension selection, and the like.

However, the L0 sparse modeling is known as one of combinatorial optimization problems that are difficult to optimize. In fact, no solution in polynomial time has been found at the present time, and it has been difficult to perform optimization with a practical calculation time as the scale increases.

In addition, in evaluation of quality of observation variable dimension selection, a method of evaluating whether or not a condition for reaching a solution that can be completely reproduced from observation data obtained by the dimension selection is satisfied includes a combinatorial explosion, and it is thus difficult to perform the evaluation with a practical calculation time.

Therefore, the present disclosure provides a method for implementing a combinatorial optimization problem that is difficult to optimize, such as the L0 sparse modeling, at a relatively higher speed by quantum calculation, as compared with a case where a combination search is performed without omission by using a so-called general-purpose computer or the like.

Although details will be described later, an outline will be described. The L0 sparse modeling is regarded as a combinatorial optimization problem of a binary variable representing zero/non-zero of a component of a sparse variable and a bit representation obtained by quantizing the sparse variable. The combinatorial optimization problem is converted into an Ising model, and the Ising model is optimized at a high speed by an Ising machine such as a quantum annealing machine (hereinafter, also referred to as a "quantum computer") or a quantum-inspired computer, and a sparse solution is calculated from an obtained optimum combination solution (hereinafter, also referred to as an "optimum solution").

Therefore, the present disclosure also provides a method for achieving optimization of observation variable dimension selection in the compressed sensing at a relatively high speed by quantum calculation.

Specifically, the observation variable dimension selection is regarded as a combinatorial optimization problem and optimized by the Ising machine, and a dimension selection for sparsification and a synthesis matrix thereof are calculated from the obtained optimum combination solution.

For example, since the L0 sparse modeling is ideal sparse modeling that is expected to have the highest accuracy, unlike the conventional L1 sparse modeling, it is possible to reduce the time and effort for verifying whether or not an approximation of sparse modeling can be applied or whether or not the solution is correct, and to guarantee a correct solution by adopting such a configuration.

In addition, the observation variable dimension selection can be made optimally instead of being made randomly, and thus, it is possible to reduce the time and effort for verifying whether or not the obtained solution is correct and to guarantee a correct solution.

First, an overall system configuration and the like will be described below, and then each processing and application example will be described.

[2. First Embodiment]

[2-1. Configuration of Device of Optimization Problem Solving System]

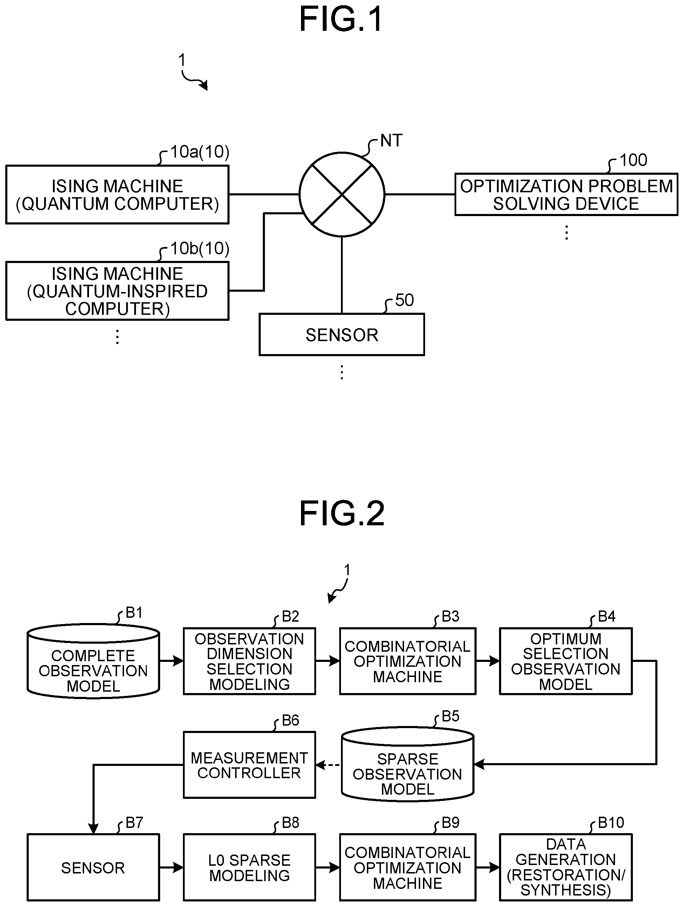

First, a configuration of an optimization problem solving system 1 illustrated in FIG. 1 will be described. FIG. 1 is a diagram illustrating an example of the configuration of the optimization problem solving system of the present disclosure. As illustrated in FIG. 1, the optimization problem solving system 1 includes an optimization problem solving device 100, a sensor 50, and a plurality of Ising machines 10. The optimization problem solving device 100, the sensor 50, and the plurality of Ising machines 10 are communicably connected in a wired manner or in a wirelessly manner via a predetermined communication network (network NT). Note that the optimization problem solving system 1 may include a plurality of optimization problem solving devices 100 and a plurality of sensors 50. The optimization problem solving system 1 is not limited to the above configuration, and may include various devices necessary for processing, for example, a device such as a measurement controller indicated by a block B6 of FIG. 2.

The optimization problem solving device 100 is an information processing device (computer) that generates an objective function for performing sparse modeling on first data by using the data (first data) sensed by the sensor 50 and transmits a coefficient matrix related to a variable to be optimized in the objective function to the Ising machine 10. For example, the variable to be optimized is a binary variable that distinguishes between a non-zero component and a zero component for each component of a sparse variable that models the first data. Furthermore, for example, the variable to be optimized is each bit variable obtained by quantizing each component of the sparse variable that models the first data. In addition, the optimization problem solving device 100 receives a calculation result (second data) of the Ising machine 10 and generates an optimum solution based on the second data.

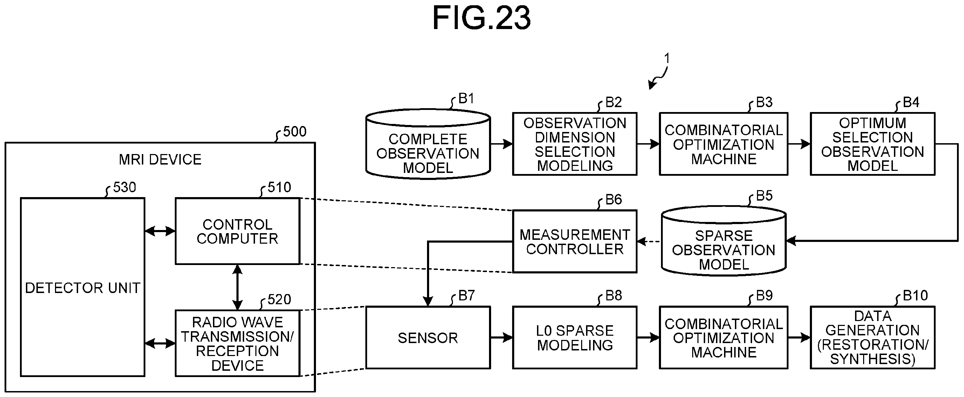

The sensor 50 is a device that converts an observed phenomenon into an electrical signal or data and outputs the electrical signal or data. The sensor 50 has a function of transmitting sensed data to the optimization problem solving device 100. The sensor 50 may be any sensor such as an image sensor, a sound sensor, an acceleration sensor, a position sensor, a temperature sensor, a humidity sensor, an illuminance sensor, or a pressure sensor. The optimization problem solving system 1 may include a device having a function as a sensor, such as an MRI device 500 (see FIG. 23), but this point will be described later in detail.

The plurality of Ising machines 10 include an Ising machine 10a, an Ising machine 10b, and the like. Note that the Ising machine 10a, the Ising machine 10b, and the like are referred to as the "Ising machine 10" in a case where they are described without being particularly distinguished. Note that the optimization problem solving system 1 may include a plurality of Ising machines 10a and a plurality of Ising machines 10b. The Ising machine 10 is a computer using an Ising model. The Ising machine 10 is a computer that solves a combinatorial optimization problem (hereinafter, also referred to as a "combinatorial optimization machine") using an Ising model.

The Ising machine 10a is a quantum computer that solves a problem by using quantum annealing. The Ising machine 10a can be implemented by a quantum annealing method or a quantum annealer. The Ising machine 10b is a quantum-inspired computer using a complementary metal-oxide-semiconductor (CMOS) or the like. For example, the Ising machine 10b may be a quantum-inspired computer using a processor such as a graphics processing unit (GPU) or an integrated circuit such as a field programmable gate array (FPGA). Note that the Ising machine 10 is not limited to the Ising machine 10a and the Ising machine 10b described above, and may have any hardware configuration as long as it is a device capable of solving the combinatorial optimization problem.

[2-2. Outline of Processing Performed by Optimization Problem Solving System]

Here, an outline of processing performed by the optimization problem solving system 1 will be described with reference to FIG. 2. FIG. 2 is a block diagram of the first embodiment.

FIG. 2 illustrates an overall configuration including the L0 sparse modeling and optimum observation dimension selection. In the overall configuration diagram of FIG. 2, the upper block group (blocks B1 to B5 in FIG. 2) is blocks that implement the optimum observation dimension selection. On the other hand, the lower block group (blocks B6 to B10 in FIG. 2) is blocks that implement the L0 sparse modeling. Note that each of the blocks B1 to B10 illustrated in FIG. 2 represents any of a device, data, or a function, and corresponds to any of the devices of the optimization problem solving system 1.

For example, a function of the L0 sparse modeling indicated by the block B8 and a data generation function indicated by the block B10 are executed by the optimization problem solving device 100. For example, the optimization problem solving device 100 may have data of a sparse observation model indicated by the block B5. For example, the data of the sparse observation model includes selected dimension information, dimensionality reduction matrix information, and the like. In addition, for example, a combinatorial optimization machine indicated by the block B3 and a combinatorial optimization machine indicated by the block B9 correspond to the Ising machine 10. Note that the combinatorial optimization machine indicated by the block B3 and the combinatorial optimization machine indicated by the block B9 may be the same Ising machine 10 or different Ising machines 10. For example, the combinatorial optimization machine indicated by the block B3 may be the Ising machine 10b serving as a first Ising machine, and the combinatorial optimization machine indicated by the block B9 may be the Ising machine 10a serving as a second Ising machine.

For example, a sensor indicated by the block B7 corresponds to the sensor 50. In addition, the measurement controller indicated by the block B6 may be integrated with the sensor 50, or the sensor 50 may be included in the optimization problem solving system 1 as a separate device. Note that the above configuration is an example, and a correspondence relationship between the blocks B1 to B10 illustrated in FIG. 2 and each device of the optimization problem solving system 1 may be any correspondence relationship as long as the processing can be implemented.

[2-2-1. Optimum Observation Dimension Selection]

The blocks B1 to B5 in FIG. 2 corresponding to the optimum observation dimension selection are usually implemented in offline processing, and are implemented in advance independently of a sensor input.

In processing for the optimum observation dimension selection, as illustrated in the block B1 which is a complete observation model, an observation matrix representing complete observation that is not sparse (also referred to as a "complete observation matrix") is input, and the observation dimension selection information and an observation matrix representing sparse observation are output. The matrix representing complete observation is, for example, a matrix representing discrete Fourier transform (DFT), a matrix representing wavelet transform, or a matrix obtained by dictionary learning or the like.

First, when a complete observation matrix that is not sparse is input to observation dimension selection modeling indicated by the block B2, modeling of combinatorial optimization of the observation dimension selection is performed based on a value of the complete observation matrix, and further, conversion to a coefficient matrix of the Ising model is performed. For example, the optimization problem solving device 100 performs the modeling of the combinatorial optimization of the observation dimension selection by the observation dimension selection modeling by using the complete observation matrix, and generates the coefficient matrix of the Ising model.

Then, this coefficient matrix is input to the Ising machine 10 corresponding to the combinatorial optimization machine indicated by the block B3, and a solution corresponding to an optimum combination is output by the Ising machine 10 corresponding to the combinatorial optimization machine of the block B3. For example, the Ising machine 10 of the block B3 transmits the solution corresponding to the optimum combination to the optimization problem solving device 100.

In the optimum selection observation model indicated by the block B4, the observation dimension selection information and a sparse observation matrix (for example, an observation matrix representing sparse observation corresponding to the selected observation dimension) are output based on optimum combination information such as the solution corresponding to the optimum combination. For example, the optimization problem solving device 100 selects an observation dimension based on the optimum combination information, and generates the observation dimension selection information and the sparse observation matrix.

In the sparse observation model indicated by the block B5, the observation dimension selection information and the sparse observation matrix are stored in a file or the like in such a way as to be used in the measurement controller indicated by the block B6 or the L0 sparse modeling indicated by the block B8.

[2-2-2. L0 Sparse Modeling]

The blocks B6 to B10 in FIG. 2 corresponding to the L0 sparse modeling are implemented in online processing for an input of the sensor subject to sparse observation. Note that the blocks B6 to B10 may be slightly modified to accumulate inputs from the sensor, and then the subsequent processing may be implemented in offline processing. In this case, the block B7 may be replaced with a data storage unit or the like, and the data storage unit of the block B7 may be included in the optimization problem solving device 100.

First, the measurement controller indicated by the block B6 controls the sensor indicated by the block B7 according to a measurement method read by a central processing unit (CPU) or the like. For example, the measurement controller indicated by the block B6 controls the sensor indicated by the block B7 by using the selected dimension information included in the sparse observation model. Note that communication for transferring sensor data may be controlled instead of the sensor indicated by the block B7.

Subsequently, data sparsely observed by the sensor indicated by the block B7 is input to the L0 sparse modeling indicated by the block B8. It is assumed that the sparse observation matrix is input in advance to the L0 sparse modeling indicated by the block B8. Based on the data of the sparse observation and the sparse observation matrix, modeling as combinatorial optimization of the L0 sparse modeling is performed, and further, conversion into the coefficient matrix of the Ising model is performed. For example, the optimization problem solving device 100 performs modeling as combinatorial optimization of the L0 sparse modeling by the L0 sparse modeling by using the data of the sparse observation and the sparse observation matrix, and generates the coefficient matrix of the Ising model.

Then, this coefficient matrix is input to the combinatorial optimization machine indicated by the block B9, and the solution corresponding to the optimum combination is output by the Ising machine 10 corresponding to the combinatorial optimization machine of the block B9. For example, the Ising machine 10 of the block B9 transmits the solution corresponding to the optimum combination to the optimization problem solving device 100.

In the data generation (restoration/synthesis) indicated by the block B10, the sparse solution is calculated based on the optimum combination information such as the solution corresponding to the optimum combination. For example, the optimization problem solving device 100 calculates the sparse solution based on the optimum combination information. Then, data restoration or generation is performed based on the complete observation matrix input in advance according to an application.

[2-2-3. User Interface]

Here, a user interface (which may hereinafter be referred to as a "UI") for a user who uses the optimization problem solving system 1 will be described.

(UI Flow)

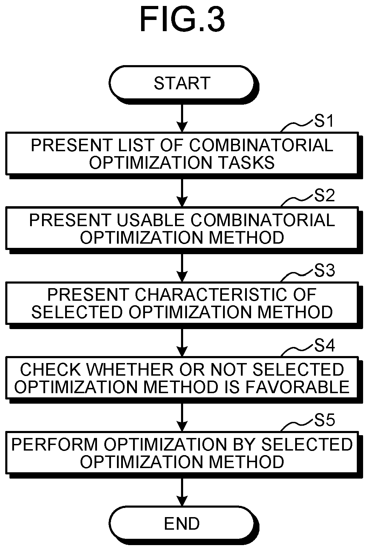

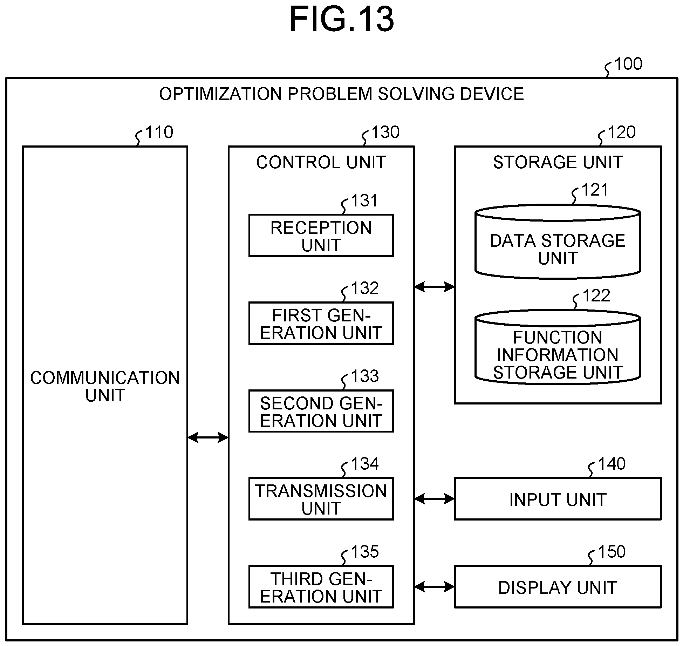

First, a processing flow related to the UI will be described with reference to FIG. 3. FIG. 3 is a flowchart illustrating a processing procedure related to the user interface. In FIG. 3, the optimization problem solving device 100 provides the UI by an input unit 140, a display unit 150 (see FIG. 13), and the like to be described later. Note that a case where the optimization problem solving device 100 provides the UI will be described as an example, but a device that provides the UI is not limited to the optimization problem solving device 100, and for example, another device such as a smartphone of the user may provide the UI to the user.

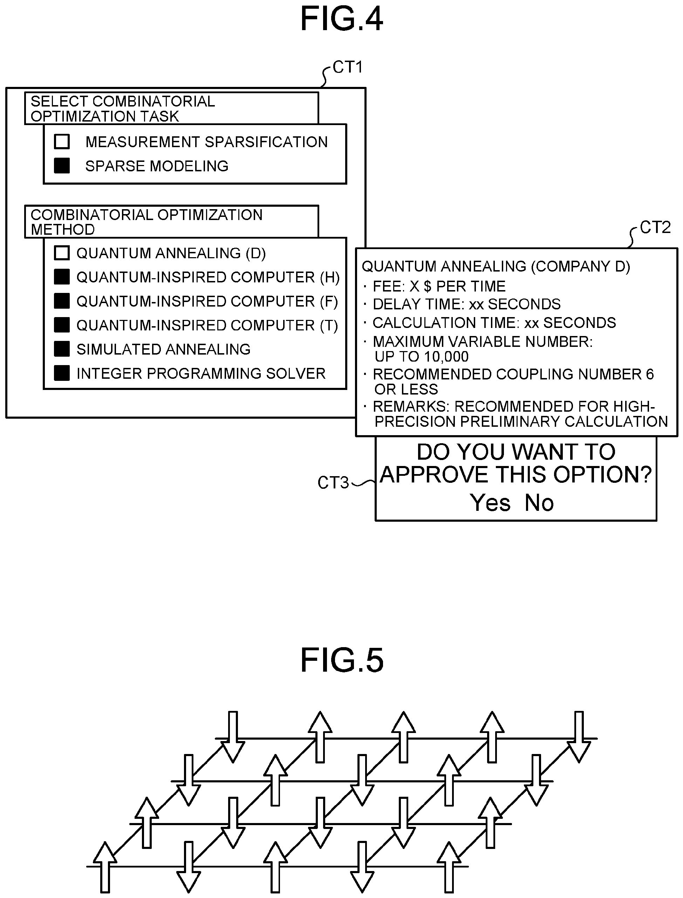

As illustrated in FIG. 3, the optimization problem solving device 100 presents a list of combinatorial optimization tasks (Step S1). For example, the optimization problem solving device 100 displays a list of a plurality of combinatorial optimization tasks such as measurement sparsification and sparse modeling as illustrated in a content CT1 in FIG. 4.

Then, the optimization problem solving device 100 presents a usable optimization method (Step S2). For example, as illustrated in the content CT1 in FIG. 4, the optimization problem solving device 100 displays a list of a plurality of optimization methods such as optimization by a quantum computer and optimization by a quantum-inspired computer. As illustrated in FIG. 1, the user presented with the Ising machines 10 that execute the respective optimization methods selects the Ising machine 10 to be used among the presented Ising machines 10.

Then, the optimization problem solving device 100 presents a characteristic of the selected optimization method (Step S3). For example, the optimization problem solving device 100 displays the characteristic of the selected optimization method as illustrated in a content CT2 in FIG. 4.

Then, the optimization problem solving device 100 checks whether or not the selected optimization method is favorable (Step S4). For example, as illustrated in a content CT3 in FIG. 4, the optimization problem solving device 100 displays a screen for checking whether or not the selected optimization method is favorable.

Then, the optimization problem solving device 100 performs optimization by the selected optimization method (Step S5). In a case where the user selects "Yes" of the content CT3 in FIG. 4, the optimization problem solving device 100 performs the processing by the task and the optimization method selected by the user.

As described above, there are two combinatorial optimization tasks, and thus, the optimization problem solving system 1 configures the flow in such a way that the optimization method can be selected according to each task. For example, observation dimension optimization processing that may be offline processing takes a little communication time, but enables selection of optimization by a quantum computer on a cloud service. For example, in a case where the user selects the measurement sparsification as the task, the optimization problem solving system 1 may present an optimization method by a quantum computer (for example, the Ising machine 10a) on a cloud service to the user in a selectable manner. The optimization problem solving system 1 may automatically select an optimization method by a quantum computer in a case where the user selects the measurement sparsification as the task.

The sparse modeling that is desired to be online processing also enables selection of optimization by a quantum-inspired computer on a local machine. For example, in a case where the optimization problem solving system 1 selects the sparse modeling performed by the user as the task, the optimization problem solving system 1 may present, to the user, an optimization method by a quantum-inspired computer on a local machine in a selectable manner. In a case where the user selects the sparse modeling as the task, the optimization problem solving system 1 may automatically select an optimization method by a quantum-inspired computer (for example, the Ising machine 10b) on a local machine. In this case, the optimization problem solving device 100 may be integrated with the Ising machine 10b.

In addition, the optimization problem solving system 1 may automate the selection of the task and the optimization method. For example, the optimization problem solving system 1 may automatically select an optimum task and device combination for a problem that the user wants to solve and present the combination to the user.

(UI Image)

Next, an image of the UI will be described with reference to FIG. 4. FIG. 4 is a diagram illustrating an example of the user interface.

As shown in the content CT1 of FIG. 4, first, the UI (screen) prompting task selection is presented. The example of FIG. 4 illustrates a case where it is required to select either optimum observation dimension selection (measurement sparsification) or sparse modeling, and "measurement sparsification" selected by the user is activated. Note that, in a case of the sparse modeling task, the L1 sparse modeling may be selectable.

In addition, the optimization methods are shown in the content CT1 in FIG. 4. It is possible to select the optimization method from among a plurality of candidates such as optimization processing by quantum annealing using a quantum computer, optimization processing using a quantum-inspired computer, simulated annealing which is a general-purpose algorithm of combinatorial optimization, and an integer programming solver (integer programming method). For example, the optimization problem solving system 1 may include six Ising machines 10 that execute six combinatorial optimization methods shown in the content CT1, respectively.

The characteristic of the optimization method is shown in the content CT2 in FIG. 4, which is presented after the optimization method is selected. Whether or not the selected optimization method is charged or free, a fee, other specifications, and the like are presented in the content CT2. Specifically, the content CT2 in FIG. 4 includes a fee per time that the Ising machine 10 performs quantum annealing of the currently selected company D, a delay time, a calculation time (which may be a number of seconds different from that of the delay time), and the like. In addition, the content CT2 in FIG. 4 shows that a maximum variable number is 1000, that a recommended coupling number is 6 or less, and the like. In addition, the content CT2 in FIG. 4 includes various remarks such as recommendation information indicating that the Ising machine 10 that performs quantum annealing of the currently selected company D is recommended for high-precision preliminary calculation. The user selects an optimization method suitable for the purpose while viewing the specifications and the like presented by the content CT2. Note that the presentation method by the UI described above is merely an example, and the UI may have any form as long as the user can select a desired task or optimization method.

[2-2-4. Ising Machine]

Next, the Ising machine 10 will be described. The Ising machine is a machine that simulates an Ising model with hardware. The Ising model is a physical model originally proposed for modeling a phase transition phenomenon of a ferromagnetic body (magnet). For example, in a case where the Ising model is expressed by an illustration, the illustration is as in FIG. 5. FIG. 5 is a diagram schematically illustrating the Ising model.

The Ising model is a physical model proposed as a simple model for explaining ferromagnetism of a magnet. In FIG. 5, each lattice point represents an electron spin at which only an upward or downward spin moment is observed.

The following Formula (1) is a Hamiltonian (energy function) of the Ising model obtained by more generalizing the simple model for a magnet, and is also called a spin-glass model.

$$H = -\sum_{i,j} J_{ij}\sigma_i\sigma_j + \sum_{k} h_k\sigma_k \qquad (1)$$

$\sigma_i$ in Formula (1) corresponds to a spin and is a variable that is -1 or 1. In addition, $J_{ij}$ corresponds to binding energy, and occurs only between adjacent spins in a case of a magnet. In addition, $h_k$ corresponds to a local magnetic field, and is a constant value in a case of a magnet.

When comparing the model shown in Formula (1) with an objective function of a combinatorial optimization problem that is often difficult to solve, they have an equivalent form. The following Formula (2) is an objective function of a quadratic unconstrained binary optimization (QUBO: quadratic binary optimization) problem.

$$L = -\sum_{i,j} J_{ij}\sigma_i\sigma_j + \sum_{k} h_k\sigma_k \qquad (2)$$

Here, the objective function shown in Formula (2) has the same form as Formula (1) that is the Hamiltonian of the Ising machine except for $\sigma_i$ (the same applies to $\sigma_j$ and $\sigma_k$) that is a binary variable having a binary value of 0 or 1. Therefore, instead of considering a difficult optimization algorithm, quantum annealing has been devised in consideration of leaving optimization to implementation of a physical ground state of the Ising machine.

$J_{ij}$ or $h_k$ may be referred to as an Ising parameter or a coefficient of the Ising model, or may be simply referred to as a parameter. For example, $\sigma_i$, $\sigma_j$, and $\sigma_k$ in Formula (2) correspond to variables for which an optimum solution is desired to be found. Further, $J_{ij}$ and $h_k$ are parameters and are given from the outside. For example, the Ising machine 10 acquires the parameters $J_{ij}$ and $h_k$ from another device such as the optimization problem solving device 100.

In quantum annealing, a model as shown in the following Formula (3) obtained by adding a quantum fluctuation term to the Ising model is handled.

$$H_{QA}(t) = \big(1 - \Gamma(t)\big)H_{Ising} + \Gamma(t)\sum_{k} \sigma_k^x \qquad (3)$$

In the model shown in Formula (3), first, the quantum fluctuation term is made dominant to implement a superposition state of all combinations, and the Hamiltonian of the Ising model is gradually made dominant. For example, the Ising machine 10 makes the second term on the right side dominant and gradually makes the first term on the right side dominant in Formula (3).

Under the condition that this process is adiabatic, the combination of spins finally reaches the ground state, that is, a state in which energy is minimized. Therefore, if the coefficient matrices $J_{ij}$ and $h_k$ of the QUBO problem are set in advance in the Hamiltonian of the Ising model, the final combination of spins of the Ising model corresponds to the binary variable. In this way, embedding the combinatorial optimization problem in the Ising model and adiabatically transitioning from the quantum fluctuation state to the ground state of the Ising model to cause the Ising spin to implement a solution of the combinatorial optimization is called quantum annealing.

For example, in Formula (3), a superposition term is dominant at t = 0, and all combinations (solution candidates) are superposed. Then, in Formula (3), the superposition term is loosened stepwise (for example, t is increased) and converged, and finally the ground state is implemented. Thereafter, the spin is measured in the ground state to be used as an optimum solution. Since these procedures are implemented by using the conventional quantum annealing technology, a detailed description thereof is omitted.

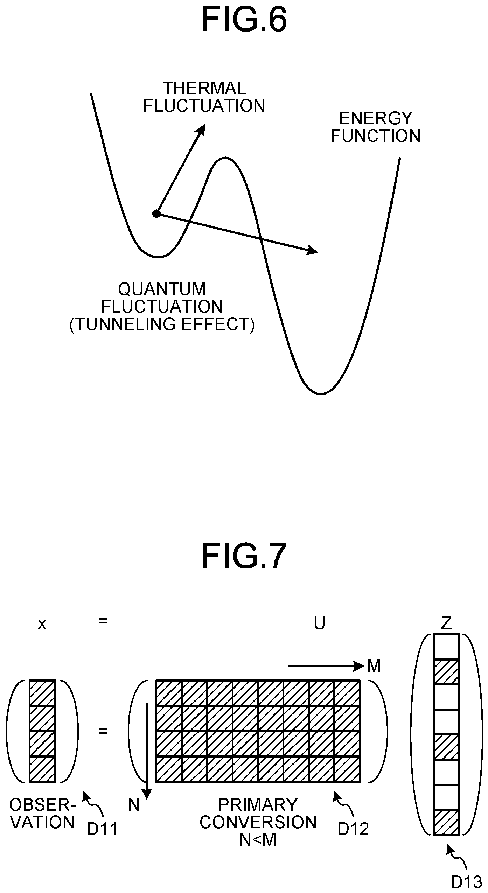

In quantum annealing, it is assumed that relatively high-speed optimization is implemented by smoothly passing through an energy barrier by a quantum tunneling effect accompanying the quantum fluctuation as illustrated in FIG. 6. FIG. 6 is a diagram schematically illustrating the tunneling effect.

However, when quantum annealing is implemented by an actual machine, it is difficult to maintain a quantum state, and this effect is thus also said to be limited.

Therefore, while diverting the idea of embedding combinatorial optimization in the Ising model, dedicated hardware (for example, the quantum-inspired computer 10b) that speeds up simulated annealing for minimizing energy by thermal fluctuation by using a non-quantum device such as a transistor circuit has also been proposed.

As described above, in the present disclosure, hardware that simulates the Ising model, such as a quantum computer and a quantum-inspired computer, is collectively referred to as the Ising machine. That is, the Ising machine 10 is not limited to a quantum computer as long as it is hardware that simulates the Ising model, and may be a device (quantum-inspired computer) configured using a processor such as a GPU or an integrated circuit such as an FPGA.

A common way to implement combinatorial optimization using these Ising machines including a quantum computer such as a quantum annealing machine is to write down an original combinatorial optimization problem into a quadratic binary optimization problem that can be equivalent to the Ising model. This will be described below.

[2-2-5. Sparse Modeling]

[2-2-5-1. L0 Sparse Modeling and L1 Sparse Modeling]

Hereinafter, the sparse modeling will be described. First, an outline of the L0 sparse modeling and the L1 sparse modeling will be described.

When an N-dimensional observation variable x and an N × M-dimensional observation matrix U are given, the observation variable x is modeled using an M-dimensional vector z (sometimes simply referred to as "vector z") as in the following Formula (4).

$$x = Uz \tag{4}$$

In a case where N = M, if the observation matrix U has an inverse matrix, a solution of the model is obtained by the following Formula (5).

$$z^* = U^{-1}x \tag{5}$$

On the other hand, in a case where N < M, the vector z is generally indefinite, and the solution is usually not uniquely obtained. However, if the number of non-zero components of the vector z is N or less, the vector z may be determined. In this manner, a solution having a small number of non-zero components is referred to as a sparse solution, and modeling based on the sparse solution is referred to as the sparse modeling. FIG. 7 is a conceptual diagram illustrating the sparse modeling. In FIG. 7, a matrix D11 corresponds to the observation variable x, a matrix D12 corresponds to the observation matrix U, and a matrix D13 corresponds to the vector z. As shown in the matrix D12, in the observation matrix U, N indicating the number of rows is smaller than M indicating the number of columns. Hollow rectangles in the matrix D13 indicate zero components, and hatched rectangles indicate non-zero components. As shown in the matrix D13, the vector z for which a solution is to be obtained is found to have sparse non-zero components. Such a solution of the vector z having the sparse non-zero components is also referred to as a sparse solution z.

In order to actually obtain the sparse solution, a minimization problem of an L0 norm as in the following Formula (6) is solved.

$$\min_{z}\|z\|_0 \quad \text{s.t} \quad x = Uz \tag{6}$$

$\|z\|_0$ in Formula (6) is referred to as the L0 norm of the vector z, and represents the number of non-zero components of the vector z. In the present disclosure, this minimization problem will be referred to as the L0 sparse modeling.

The L0 sparse modeling is a combinatorial optimization problem, and it is necessary to examine all combinations without omission to directly solve the problem. Therefore, the L0 sparse modeling is not practical in the method of examining all combinations without omission as described above, and a minimization problem of an L1 norm as in the following Formula (7) is often solved instead.

$$\min_z \|z\|_1 \quad \text{s.t} \quad x \; = \; Uz \qquad\qquad (7)$$

$\|z\|_1$ in Formula (7) is referred to as the L1 norm of the vector z, and is a sum of absolute values of the components of the vector z. In the present disclosure, this minimization problem will be referred to as the L1 sparse modeling.

The L1 sparse modeling is not a combinatorial optimization problem unlike the L0 sparse modeling, and can be efficiently solved within the scope of a linear programming method. Therefore, in the sparse modeling, it is a de facto standard to obtain the sparse solution by the L1 sparse modeling from the viewpoint of practicality.

Meanwhile, a sparse modeling problem is originally a problem for which a solution is not fixed. Then, narrowing down the solution is implemented by assuming sparsity of the solution. However, even if the sparsity of the solution can be assumed, it is not always a true solution. Therefore, even in a case where data is restored from the sparse solution or super-resolution data is generated, there is no guarantee that the generated data is close to true data.

For such a problem, in the L0 sparse modeling, it has been proved that when arbitrary column vectors constituting the observation matrix U are selected as many as the number of non-zero components of the vector z, if these are linearly independent, only one true solution is reached. It has been found that this condition is relatively easy to satisfy.

On the other hand, in the L1 sparse modeling, evaluation of a condition for reaching a true solution, that is, a condition for reaching the same solution as the L0 sparse modeling requires evaluation of a RIP constant (RIP coefficient). The condition using the RIP constant is also referred to as an RIP condition.

In qualitative expression, the RIP condition is a condition that, when arbitrary column vectors constituting the observation matrix U are selected as many as the number of non-zero components of the vector z, they are nearly orthogonal. This condition is not necessarily a condition that can be easily satisfied. In addition, it is difficult to evaluate the RIP constant itself in the RIP condition, and usually, the evaluation is performed in order (of calculation amount), and it is not possible to accurately and strictly evaluate whether or not a true solution is reached.

That is, the condition for the L0 sparse modeling for reaching a true solution is "linearly independent", whereas the condition for the L1 sparse modeling is "nearly orthogonal" which is a slightly severe condition. It is expected not only to have less constraints on the observation matrix in the L0 sparse modeling than in the L1 sparse modeling, but also to be robust to noise or to have a higher compression rate in terms of performance.

Therefore, there is a demand for obtaining the sparse solution by using the L0 sparse modeling. As described above, in a case of a quadratic binary combinatorial optimization problem, the solution of the combinatorial optimization can be obtained at a relatively high speed by the Ising machine 10.

Therefore, the optimization problem solving device 100 of the optimization problem solving system 1 formulates the L0 sparse modeling as a combinatorial optimization problem again, and further converts the combinatorial optimization problem into a quadratic binary combinatorial optimization problem.

Hereinafter, processing in which the optimization problem solving device 100 formulates a combinatorial optimization problem of the L0 sparse modeling, converts the combinatorial optimization problem into an Ising model, and calculates a sparse solution from a solution of the combinatorial optimization will be described.

[2-2-5-2. L0 Sparse Modeling as Combinatorial Optimization Problem]

First, formulation of the L0 sparse modeling as a combinatorial optimization problem will be described.

When a set of subscripts of the non-zero components of the sparse solution z is S (hereinafter, also referred to as a "set S"), it can be expressed as the following Formula (8).

$$x = F_S z_S \qquad\qquad (8)$$

Note that $z_S$ in Formula (8) is a vector including only S rows in the sparse solution z, and $F_S$ is a matrix including only S columns (S is a set) in the observation matrix U. For example, $z_S$ in Formula (8) is a vector in which rows corresponding to the respective subscripts included in the set S in the sparse solution z are arranged in the order of the subscripts. In addition, $F_S$ is a matrix in which columns corresponding to the respective subscripts included in the set S in the observation matrix U are arranged in the order of subscripts.

At this time, the sparse solution is obtained as in the following Formula (9).

$$z_S = W_S x \qquad (9)$$

However, in a case where the following Formula (10) is satisfied, $W_S$ of Formula (9) is obtained by the following Formula (11).

$$\det(F_S^T F_S)^{-1} \neq 0 \qquad (10)$$

$$W_S = (F_S^T F_S)^{-1} F_S^T \qquad (11)$$

A penalty function expressed in the following Formula (12) is considered using the above.

$$P(S) = \|x - F_S z_S\|^2 \qquad (12)$$

The penalty function in Formula (12) is 0 when $z_S$ is the sparse solution, otherwise, the penalty function is greater than 0. Therefore, the set S needs to satisfy P(S) = 0. With this set S, the L0 sparse modeling can be expressed as the following Formula (13).

$$S^* = \arg\min_S\{|S| + \lambda P(S)\} \qquad (13)$$

Here, |S| represents the number of elements of the set S, and is expressed as the following Formula (14).

$$|S| = \|z\|_0 \qquad (14)$$

$\lambda$ is a hyperparameter representing a weight of a penalty term, and is set to a large value to always satisfy the constraint.

Here, when the following Formula (15) is satisfied, the following Formula (16) is satisfied with respect to the right side of the Formula (12).

$$z = W x = (F_S^T F_S)^{-1} F_S^T x \qquad (15)$$

$$\|x - F_S(F_S^T F_S)^{-1}F_S^T x\|^2$$
$$= x^T(I - F_S(F_S^T F_S)^{-1}F_S^T)^T(I - F_S(F_S^T F_S)^{-1}F_S^T)x$$
$$= x^T(I - F_S(F_S^T F_S)^{-1}F_S^T)^2 x$$
$$= x^T(I - 2F_S(F_S^T F_S)^{-1}F_S^T + F_S(F_S^T F_S)^{-1}F_S^T F_S(F_S^T F_S)^{-1}F_S^T)\ x \qquad (16)$$
$$= x^T(I - F_S(F_S^T F_S)^{-1}F_S^T)x$$
$$= x^T x - x^T F_S(F_S^T F_S)^{-1}F_S^T x$$

In this case, the L0 sparse modeling can be expressed as the following Formula (17).

$$S^* = \arg\min_{S}\{|S| - \lambda(x^T F_S(F_S^T F_S)^{-1}F_S^T x)\} \qquad (17)$$

[2-2-5-3. L0 Sparse Modeling Using Binary Variable]

In the formulation up to the above Formula (19), the set S of the subscripts of the non-zero components is obtained as a solution of combinatorial optimization. However, this formulation cannot be converted into the final target Ising model as it is. Therefore, the optimization problem solving device 100 performs formulation using a binary variable in such a way as to be handled with the Ising model. Therefore, a diagonal matrix B in which components of the columns of S are 1 and the others are 0 is considered. For example, the diagonal matrix B in which the components of the columns corresponding to the respective subscripts included in the set S are 1 and the others are 0 is used. Specifically, the diagonal matrix B as shown in the following Formula (18) is used. The optimization problem solving device 100 uses the diagonal matrix B as shown in Formula (18). Formula (18) satisfies the following Formula (19).

$$B = \mathrm{diag}(b_1, b_2 \dots b_M) = \begin{pmatrix} b_1 & 0 & \dots & 0 \\ 0 & b_2 & \dots & 0 \\ 0 & 0 & \dots & 0 \\ 0 & 0 & \dots & b_M \end{pmatrix} \qquad (18)$$

$$b_i = \begin{cases} 1 & (i \in S) \\ 0 & (i \in \bar{S}) \end{cases} \qquad (19)$$

A diagonal component of the diagonal matrix B shown in Formula (18) corresponds to a binary variable that determines whether the component is zero or non-zero for each dimension of the sparse solution. The following Formula (20) can be derived when using the diagonal matrix B shown in Formula (18).

$$F_S(F_S^T F_S)^{-1}F_S^T = UB(I - B + BU^T UB)^{-1}BU^T \qquad (20)$$

In a case of a cofactor determinant of a component of a subscript i, in which $b_i = 0$, first, a relationship of the following Formula (21) is established for the determinant.

$$\det F_S^T F_S = \det(I - B + BF^T FB) \qquad (21)$$

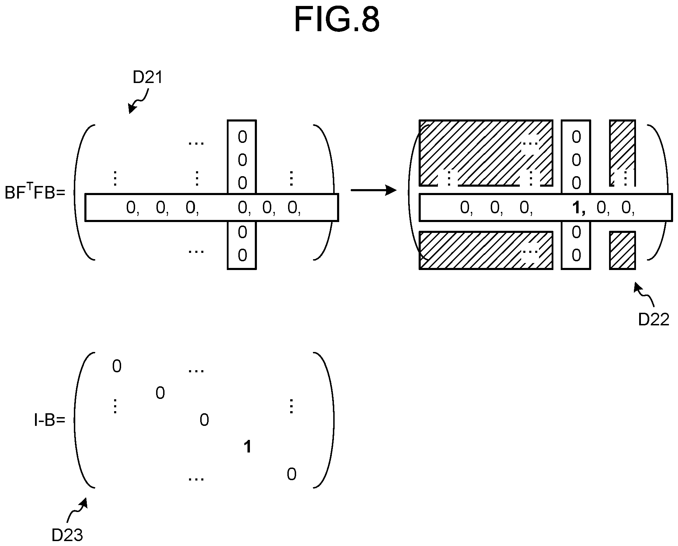

The relationship of Formula (21) is illustrated in FIG. 8. FIG. 8 is a conceptual diagram illustrating the determinant regarding binary conversion. A matrix D21 in FIG. 8 indicates a case where the determinant is 0. Furthermore, a matrix D22 in FIG. 8 illustrates a case where the determinant is a determinant of a hatched portion. Furthermore, a matrix D23 in FIG. 8 indicates a matrix for setting a portion where a diagonal component of $BF^TFB$ is 0 to 1.

Next, a Kramer's formula of an inverse matrix is considered as shown in the following Formula (22).

$$A^{-1} = \frac{1}{|A|}\begin{pmatrix} |\widetilde{A_{11}}| & \cdots & |\widetilde{A_{M1}}| \\ \vdots & \ddots & \vdots \\ |\widetilde{A_{1M}}| & \cdots & |\widetilde{A_{MM}}| \end{pmatrix} \quad (22)$$

Since each component is a determinant, the above formula (for example, Formula (20)) is obtained as a result by sequentially applying the above relationship of the determinant.

Therefore, it can be expressed as the following Formula (23).

$$x^T F(F^T F)^{-1} F^T x = x^T UB(I - B + BU^T UB)^{-1} BU^T x \quad (23)$$

$$= \text{tr}(B(I - B + BU^T UB)^{-1} BU^T x x^T U)$$

Here, the following Formula (24) is used to derive Formula (23). For example, the optimization problem solving device 100 generates Formula (23) by using Formula (24) .

$$x^T A x = \text{tr}(Axx^T) \quad (24)$$

Then, the L0 sparse modeling can be formulated as a binary combinatorial optimization problem as in the following Formula (25).

$$B^* = \arg\min_B\{\text{tr}(B) - \lambda\text{tr}(B(I - B + BU^T UB)^{-1} BU^T x x^T U)\} \quad (25)$$

Here, the following Formula (26) is used to derive Formula (25). For example, the optimization problem solving device 100 generates Formula (25) by using Formula (26) .

$$|S| = \text{tr}(B) \quad (26)$$

As described above, the optimization problem solving device 100 can formulate an L0 sparse modeling problem as a combinatorial optimization problem in which whether each dimension of the sparse solution is zero or non-zero is a binary variable. From the above, it can be seen that the L0 sparse modeling problem is a combinatorial optimization problem in which whether each dimension of the sparse solution is zero or non-zero is a binary variable.

[2-2-5-4. L0 Sparse Modeling in QUBO Form]

In order to handle a combinatorial optimization problem with the Ising model, it is necessary that an objective function of the combinatorial optimization problem is not only simply represented by a binary variable but also expressed by a quadratic form of the binary variable. Therefore, in Formula (25), it is necessary to replace a portion represented by an inverse matrix such as $(I - B + BU^TUB)^{-1}$ with the quadratic form or the like.

When absolute values of eigenvalues of $C = I - U^TU$ are all less than 1, the following Formula (27) is satisfied.

$$(I - B + BU^TUB)^{-1} = \lim_{K\to\infty} \sum_{k=0}^{K} (BCB)^k \qquad (27)$$

In a case where the absolute values of the eigenvalues of $C = I - U^TU$ are sufficiently smaller than 1, that is, in a case where the respective columns of the observation matrix $U$ are nearly orthogonal, the right side can be approximated only by a term of $K = 1$. In a case of being approximated by $K = 1$, it can be expressed as the following Formula (28).

$$(I - B + BU^TUB)^{-1} \approx I + BCB \qquad (28)$$

Thereby, the L0 sparse modeling is approximated by a combinatorial optimization problem such as the following Formula (29).

$$B^* = \arg\min_{B}\{\mathrm{tr}(B) - \lambda\,\mathrm{tr}(BCBU^Txx^TU)\} \qquad (29)$$

This combinatorial optimization problem has quadratic forms of binary variables ($b_1$, $b_2$,..., and $b_M$). Therefore, the combinatorial optimization problem can be treated as the QUBO problem. In a case of being approximated by $K > 1$, it can be expressed as the following Formula (30).

$$K \quad = \sum_{k=0}^{K} (BCB)^k \qquad (30)$$

As a result, the penalty term is approximated as in the following Formula (31).

$$-\mathrm{tr}\left(\sum_{k=0}^{K} (BCB)^k\, U^Txx^TU\right) \qquad (31)$$

The penalty term in Formula (31) is in a 2K-dimensional form with respect to the binary variables ($b_1$, $b_2$,..., and $b_M$). In order to be treated as the QUBO problem, it is necessary to reduce 2K dimensions to 2 dimensions. For this, the penalty term is developed using a program or the like. For example, the optimization problem solving device 100 reduces the number of dimensions of the penalty term to 2 dimension by using a program for developing the penalty term.

Then, each time a term equal to or more than the square of the binary variable appears, a new auxiliary binary variable is introduced and reduced until the term becomes equal to or less than the square of the auxiliary binary variable. For example, in a case where the L-th order term of the binary variable appears, the number of dimensions can be reduced to the first-order term by adding L auxiliary variables ($b_{p1}$ to $b_{pL}$) as in the following Formula (32).

$$\prod_{k=1}^{L} b_{i_k} = b_{i_1} b_{i_2} b_{i_3} \dots b_L$$

$$= b_{p_2} b_{i_3} \dots b_L \quad \left( b_{p_1} = b_{i_1}, b_{p_2} = b_{p_1} b_{i_2} \right) \qquad (32)$$

$$= b_{p_m} b_{i_{m+1}} \dots b_L \quad \left( b_{p_m} = b_{p_{m-1}} b_{i_m} \right)$$

$$= b_{p_L} \quad \left( b_{p_L} = b_{p_{L-1}} b_{i_L} \right)$$

However, this auxiliary variable must satisfy the following Formula (33). Therefore, a penalty term such as the following Formula (34) that becomes 0 if this constraint is satisfied and has a value larger than 0 otherwise is added to the objective function (for example, Formula (29)) each time the L-th order term appears.

$$b_{p_m} = b_{p_{m-1}} b_{i_m} \qquad (33)$$

$$H_{p_m} = 3 b_{p_m} + b_{p_{m-1}} b_{i_m} - 2 b_{p_m} b_{p_{m-1}} - 2 b_{p_m} b_{i_m} \qquad (34)$$

In actual addition, addition is performed by applying an appropriate positive hyperparameter $\lambda_{pm}$. As a result, the optimization problem solving device 100 can perform conversion into the QUBO problem that is in the quadratic form of the binary variable even in a case of being approximated by K > 1. In this case as well, it can be expected that the accuracy of approximation is improved as the eigenvalue of I-$U^TU$ decreases. That is, it can be said that the closer the $U^TU$ is to a unit matrix, the better.

In addition, for series expansion and truncated approximation of the inverse matrix, it is desirable that the eigenvalue (spectrum norm) of the maximum absolute value of I-$U^TU$ is 1 or less.

However, in a case where this condition is not necessarily satisfied, series expansion can be implemented by taking in the effect of regularization.

Specifically, optimization in which an L2 regularization term is added to the original L0 optimization formula as expressed in the following Formula (35) is considered.

$$z^* = \arg \min_{z} [\|z\|_0 + \lambda \|x - Uz\|_2^2 + \gamma \|z\|_2^2] \qquad (35)$$

In this case, the inverse matrix is replaced with the following Formula (36), and the eigenvalue is multiplied by $1/(1 + \gamma)$ in total.

$$(I - B + BU^TUB)^{-1} \rightarrow ((1 + \gamma)I - B + BU^TUB)^{-1}$$

$$= \frac{1}{1 + \gamma} \left( I - \frac{1}{1 + \gamma} BCB \right)^{-1} \qquad (36)$$

As a result, it is possible to reduce the absolute value of the eigenvalue of (I - $U^TU$)/(1 + $\gamma$) by the adjustment of the regularization and implement a condition that enables the series expansion or truncated approximation of the inverse matrix.

In the above example, the method of obtaining the optimum solution by approximating the inverse matrix has been described. However, the optimization problem solving device 100 is not limited to the above method, and may perform conversion into the QUBO problem by various methods. This will be described below.

For example, the inverse matrix can be eliminated from an optimization formula by using the auxiliary variable. The optimization problem solving device 100 may remove the inverse matrix from the optimization formula by using the auxiliary variable. The second term of Formula (25) of the optimization including the inverse matrix described above will be considered again. The second term of Formula (25) can be transformed into Formula (37) below.

$$L(B) = -\mathrm{tr}(B(I - BCB)^{-1}BU^T xx^T U)$$
$$= -x^T UB(I - BCB)^{-1}BU^T x \tag{37}$$

Here, the auxiliary variable is introduced as in the following Formula (38).

$$z = B(I - BCB)^{-1}BU^T x$$
$$= ((C - CBC)^{-1} - C^{-1})U^T x \tag{38}$$

Here, the second equal sign uses the Woodbury formula of the inverse matrix.
z in Formula (38) is a vector having the same number of dimensions as the solution. Then, instead of the second term of Formula (25), an objective function including a Lagrange multiplier term can be considered as Formula (39) below.

$$L(b, z, w) = -x^T U z - w^T \big((C - CBC)z - CBU^T x\big) \tag{39}$$

Here, w in Formula (39) is a vector having the same number of dimensions as z. In a form including the Lagrange multiplier term of Formula (39), the L0 sparse modeling can be expressed as the following Formula (40).

$$B^*, z^*, w^* = \arg \min_{B,z,w}\{\mathrm{tr}(B) + \lambda L(b, z, w)\} \tag{40}$$

This optimization can be solved by alternating optimization of B, z, and w. The alternating optimization is implemented by the following pseudo algorithm.

(1-1) Initializing z and w (random initialization, zero initialization, or the like)

(1-2) Fixing z and w, and obtaining B using Ising machine

(1-3) Fixing b and updating z and w

For example, when a steepest descent method is used, update is made as in the following Formulas (41) and (42).

$$z \leftarrow z - \eta\lambda(U^T x + (C - CBC)w) \tag{41}$$

$$w \leftarrow w - \eta\lambda((C - CBC)z - CBU^T x) \tag{42}$$

(1-4) Repeating (1-2) and (1-3) until value of objective function of optimization converges or until (1-2) and (1-3) are performed a predetermined number of times.
The optimization problem solving device 100 may use the solution z obtained as described above as it is as a sparse solution z*. However, in a case of this algorithm, z* may include a numerical error. Therefore, the optimization problem solving device 100 may use only B*(b*) to obtain the sparse solution z* again in the subsequent processing.

For the L0 sparse modeling, another solution using the Lagrange multiplier may be, more simply, formulation as in the following Formula (43).

$$B^*, z^*, w^* = \arg\min_{B,z,w}\{\text{tr}(B) - w^T(x - UBz)\} \tag{43}$$

Also in this case, the optimization can also be solved by alternating optimization of B, z, and w. The alternating optimization is implemented by the following pseudo algorithm in which the update formula of (1-3) of the algorithm described above is changed.

(2-1) Initializing z and w (random initialization, zero initialization, or the like)

(2-2) Fixing z and w, and obtaining B using Ising machine

(2-3) Fixing b and updating z and w

For example, when a steepest descent method is used, update is made as in the following Formulas (44) and (45).

$$z \leftarrow z - \eta BU^T w \tag{44}$$

$$w \leftarrow w - \eta(x - UBz) \tag{45}$$

(2-4) Repeating (2-2) and (2-3) until value of objective function of optimization converges or until (2-2) and (2-3) are performed a predetermined number of times.
The optimization problem solving device 100 may use the solution z obtained as described above as it is as a sparse solution z*. However, in a case of this algorithm, z* may include a numerical error. Therefore, the optimization problem solving device 100 may use only B*(b*) to obtain the sparse solution z* again in the subsequent processing.

[2-2-5-5. K-bit Quantized L0 Sparse Modeling]

Next, as another method, K-bit quantized L0 sparse modeling will be described.
Briefly reciting the L0 sparse modeling, formulation as a minimization problem of an objective function (loss function) as in the following Formula (46) is made.

$$L(z, w) = \|z\|_0 + w^T(x - Uz) \tag{46}$$

Here, w in Formula (46) is a Lagrange multiplier. The objective function of Formula (46) is often used in a case where no noise is included in x, but an objective function (loss function) such as the following Formula (47) is often used in a case where noise is included.

$$L_\lambda(z) = \|z\|_0 + \lambda\|x - Uz\|_2^2 \tag{47}$$

Here, $\lambda$ is a positive constant determined according to the magnitude of noise. Although the K-bit quantized L0 sparse modeling can be implemented by using any one of the objective functions of Formulas (46) and (47), a case of using the objective function of Formula (47) will be described first.
In the K-bit quantized L0 sparse modeling, it is considered that each component of the sparse solution z is quantized with K bits as in the following Formula (48).

$$z_i = s_i \sum_{k=1}^{K-1} 2^{k-1} b_{ik} \qquad (48)$$

Here, $s_i$ in Formula (48) represents a code of $z_i$, and ($b_{i1}$, $b_{i2}$,..., and $b_{iK-1}$) is a binary expression of $|z_i|$. $s_i$ can also be replaced with the binary variable $b_i$ by the following Formula (49).

$$s_i = 1 - 2b_i \qquad (49)$$

In this case, deformation can be made as in the following Formula (50).

$$z_i = (1 - 2b_i) \sum_{k=1}^{K-1} 2^{-k} b_{ik} = \sum_{k=1}^{K-1} 2^{-k}(b_{ik} - 2a_{ik}) \qquad (50)$$

Here, $a_{ik}$ is a binary variable that satisfies the constraint condition of Formula (51).

$$a_{ik} = b_i b_{ik} \qquad (51)$$

When Formula (50) is used, the second term in the objective function of Formula (47) can be expressed by a quadratic form of a binary variable as in the following Formula (52).

$$\|x - Uz\|_2^2 = \sum_{i=1}^{N} \left( x_i - \sum_{j=1}^{M} u_{ij} z_j \right)^2$$
$$= \sum_{i=1}^{N} \left( x_i - \sum_{j=1}^{M} u_{ij} \sum_{k=1}^{K-1} 2^{-k}(b_{jk} - 2a_{jk}) \right)^2 \qquad (52)$$

On the other hand, the first term in the objective function of Formula (47) can be expressed as in Formula (53) below.

$$\|z\|_0 = \sum_{i=1}^{M} \left( 1 - \prod_{k=1}^{K-1}(1 - b_{ik}) \right) \qquad (53)$$

This is because only in the following Formula (54), that is, in the following Formula (55), the series is 1, and in the following Formula (56), the series is 0.

$$z_i = 0 \tag{54}$$

$$(b_{i1}, b_{i2} \dots b_{iK-1}) = 0 \tag{55}$$

$$z_i \neq 0 \tag{56}$$

Here, a binary variable $c_{ik}$ satisfying the constraint conditions in the following Formulas (57) and (58) is newly prepared.

$$c_{i0} = 1 \tag{57}$$

$$c_{ik} = c_{ik-1}(1 - b_{ik}), \forall k \in \{1 \dots K - 1\} \tag{58}$$

Then, since replacement with the following Formula (59) is possible, the following Formula (60) is obtained.

$$\prod_{k=1}^{K-1}(1 - b_{ik}) = c_{iK-1} \tag{59}$$

$$\|z\|_0 = \sum_{i=1}^{M}(1 - c_{iK-1}) \tag{60}$$

From the above, the objective function can be written down as the following Formula (61) and a quadratic form.

$$L_\lambda(a,b,c) = \sum_{i=1}^{M}(1 - c_{iK-1}) + \lambda \sum_{i=1}^{N}\left(x_i - \sum_{j=1}^{M} u_{ij} \sum_{k=1}^{K-1} 2^{-k}(b_{jk} - 2a_{jk})\right)^2 \tag{61}$$

However, since the constraint conditions related to the auxiliary variables $a_{ik}$ and $c_{ik}$ are not taken into consideration, a correct solution cannot be obtained as it is.
Therefore, first, it is considered to implement the following Formula (62), which is a constraint related to the auxiliary variable $a_{ik}$, in a quadratic form.

$$a_{ik} = b_i b_{ik} \tag{62}$$

The following Formula (63) is a quadratic form that is 0 when the constraint shown in Formula (62) is satisfied and is otherwise greater than 0.

$$M_{ik} = 3a_{ik} + b_i b_{ik} - 2b_i a_{ik} - 2b_{ik} a_{ik} \tag{63}$$

Next, the following Formula (64), which is a constraint related to the auxiliary variable $c_{ik}$, is considered.

$$c_{ik} = c_{ik-1}(1 - b_{ik}) \qquad (64)$$

The following Formula (65) is a quadratic form that is 0 when the constraint shown in Formula (64) is satisfied and is otherwise greater than 0.

$$N_{ik} = 3c_{ik} + c_{ik-1}(1 - b_{ik}) - 2c_{ik-1}c_{ik} - 2(1 - b_{ik})c_{ik} \qquad (65)$$

An objective function to which these constraints (Formulas (63) and (65)) are added can be expressed as the following Formula (66).

$$L_{\lambda,\mu,\nu}(a, b, c) = L_{\lambda}(a, b, c) + \sum_{i=1}^{M} \sum_{k=1}^{K-1} (\mu_{ik} M_{ik} + \nu_{ik} N_{ik}) \qquad (66)$$

Note that all coefficients $\mu_{ik}$ and $\nu_{ik}$ of the constraint term may be made common as in the following Formula (67).

$$L_{\lambda,\gamma}(a, b, c) = L_{\lambda}(a, b, c) + \gamma \sum_{i=1}^{M} \sum_{k=1}^{K-1} (M_{ik} + N_{ik}) \qquad (67)$$

The objective function of Formula (67) is in a quadratic form of a binary variable, but is expressed in a quadratic form of a spin variable when converted into the spin variable as in the following Formulas (68), (69), (70), and (71).

$$\sigma_{b_{ik}} = 1 - 2b_{ik} \qquad (68)$$

$$\sigma_{a_{ik}} = 1 - 2a_{ik} \qquad (69)$$

$$\sigma_{c_{ik}} = 1 - 2c_{ik} \qquad (70)$$

$$H(\sigma_a, \sigma_b, \sigma_c) = L_{\lambda,\mu,\nu}(a, b, c) \qquad (71)$$

Since $H(\sigma_a, \sigma_b, \sigma_c)$ in Formula (71) is the quadratic form of the spin variable, it can be optimized by the Ising machine 10, and optimum spins $\sigma_a^*$, $\sigma_b^*$, and $\sigma_c^*$ that minimize the objective function can be obtained.
Binary variables a*, b*, and c* optimized by the obtained optimum spins $\sigma_a^*$, $\sigma_b^*$, and $\sigma_c^*$ can be obtained as in the following Formulas (72), (73), and (74).

$$b_{ik}^* = 1 - \sigma_{b_{ik}}^* \qquad (72)$$

$$a^*_{ik} = 1 - \sigma^*_{a_{ik}} \tag{73}$$

$$c^*_{ik} = 1 - \sigma^*_{c_{ik}} \tag{74}$$

In a case of using the results of a* and b*, a sparse solution quantized with K bits is obtained as in the following Formula (75).

$$z^*_i = \sum_{k=1}^{K-1} 2^{-k}(b^*_{ik} - 2a^*_{ik}) \tag{75}$$

In a case where a higher resolution is required, only information indicating whether the component of the solution is zero or non-zero is output, and z* may be obtained again based on the information. Information indicating whether a component $z_i^*$ of the sparse solution is zero or non-zero is represented by $c^*_{ik-1}$.

Although the above is the sparse modeling in a case where there is noise, in the formulation in a case where there is no noise, an objective function of the following Formula (76) is used instead of $L_\lambda(a,b,c)$.

$$L(b,c,w) = \sum_{i=1}^{M}(1 - c_{iK-1})$$
$$- \sum_{i=1}^{N} w_i \left( x_i - \sum_{j=1}^{M} u_{ij} \sum_{k=1}^{K-1} 2^{-k}(b_{jk} - 2b_j b_{jk}) \right) \tag{76}$$

In this case, the objective function is in a quadratic form of a binary variable, but it is necessary to add a constraint term as in the following Formula (77).

$$H(\sigma_b, \sigma_c, w) = L(b,c,w) + \sum_{i=1}^{M}\sum_{k=1}^{K-1}(v_{ik}N_{ik}) \tag{77}$$

Since the constraint term is also in a quadratic form, the objective function is in a quadratic form of a binary variable as a whole, and thus can be solved at a relatively high speed by the Ising machine 10.
However, since w is a multiplier, it is also necessary to estimate w. To this end, the following quantum annealing and alternating optimization of a gradient method are repeated until a predetermined condition is satisfied.

(3-1) Initializing w (initialization to random number or zero)

(3-2) Optimizing combination variables b and c by following Formula (78) by quantum annealing

$$b,c = \arg\min_{b,c} H(\sigma_b, \sigma_c, w) \tag{78}$$

(3-3) Updating w by gradient method according to following Formula (79)

$$w_i \leftarrow w_i - \eta \left( x_i - \sum_{j=1}^{M} u_{ij} \sum_{k=1}^{K-1} 2^{-k}\left( b_{jk} - 2b_j b_{jk} \right) \right) \qquad (79)$$

Here, $\eta$ in Formula (79) is a learning rate parameter of the gradient method, for example, 0.01.

(3-4) Repeating (3-2) and (3-3) until predetermined condition is satisfied, and setting obtained b and c as optimized binary variables b* and c*

The sparse solution z* may be output from the binary variables b* and c* obtained as described above, or information $c^*_{ik-1}$ indicating whether the sparse solution is zero or non-zero may be output.

Although the two methods have been described above, various other modifications of the K-bit quantized L0 sparse modeling are conceivable. For example, a quantization interval is not set to an equal interval, or the quantization interval is increased as an absolute value increases. The L0 regularization term may also be expressed with only the upper bit because the lower bit has an error.

Furthermore, for example, in a case where it is known that the component of the sparse solution is 0 or more, a binary variable a may be omitted from the formulation. Furthermore, as a method similar to the group Lasso, a case where the sparse solution is zero or non-zero in units of groups is also considered. A case where each component of N sparse solutions further includes L elements, and in a case where the L elements are all 0, the component is considered as a zero component, otherwise, the component is considered as a non-zero component. In this case, the L0 regularization term can be written down as the following Formula (80).

$$\|z\|_0 = \sum_{i=1}^{M} \left( 1 - \prod_{l=1}^{L} \prod_{k=1}^{K-1}(1 - b_{ilk}) \right) = \sum_{i=1}^{M} \left( 1 - \prod_{l=1}^{L} c_{ilK-1} \right) \qquad (80)$$

Here, a binary variable $d_{il}$ satisfying the constraint conditions in the following Formulas (81) and (82) is newly prepared.

$$d_{i0} = 1 \qquad (81)$$

$$d_{il} = d_{il-1} c_{ilK-1}, \forall l \in \{1 \dots L - 1\} \qquad (82)$$

Then, since replacement with the following Formula (83) is possible, the following Formula (84) is obtained.

$$\prod_{l=1}^{L} c_{ilK-1} = d_{iL} \qquad (83)$$

$$\|z\|_0 = \sum_{i=1}^{M} (1 - d_{iL}) \qquad (84)$$

In order to make the binary variable $d_{il}$ satisfy the constraint, a constraint term of the following Formula (85) is added to the objective function.

$$P_{il} = 3d_{il} + d_{il-1}c_{ilK-1} - 2d_{il-1}d_{il} - 2c_{ilK-1}d_{il} \qquad (85)$$

[2-2-5-6. L0 Sparse Modeling with Ising Model]

As described above, the optimization problem solving device 100 formulates the L0 sparse modeling as a combinational optimum problem of binary variables, and further converts the L0 sparse modeling into a QUBO problem. As described above, it is easy to embed the QUBO problem converted by the optimization problem solving device 100 in the Ising model.

First, the optimization problem solving device 100 converts the binary variable into the spin variable in order to convert the QUBO problem into the Ising model. For this, the following Formula (86) is used.

$$\sigma_i = 1 - 2b_i \qquad (86)$$

The optimization problem solving device 100 converts the QUBO problem into a quadratic form of the spin variable, that is, the Ising model, according to Formula (86). Then, for the Ising model formulated in this way, the optimization problem solving device 100 extracts a coefficient matrix by using a program or the like. For example, the coefficient matrix is an array including coefficients related to a first-order or higher-order term of the variable to be optimized extracted from the objective function. As described above, the optimization problem solving device 100 extracts the coefficient matrix as the Ising parameter from the objective function corresponding to the first data from the sensor. Then, the optimization problem solving device 100 uses the extracted coefficient matrix to set an inter-spin coupling constant of the Ising machine 10 and a local magnetic field. The optimization problem solving device 100 transmits the extracted coefficient matrix (Ising parameter) to the Ising machine 10. Then, the Ising machine 10 performs annealing processing, calculates a combination ($\sigma^*_1, \ldots, \sigma^*_M, \ldots$) of basis spins of the Ising model, and transmits the combination to the optimization problem solving device 100. The optimization problem solving device 100 receives the combination of the basis spins of the Ising model calculated by the Ising machine 10.

The optimization problem solving device 100 can obtain an optimized binary variable from the combination of the basis spins by using the following Formula (87).

$$b_i^* = (1 - \sigma_i^*)/2 \qquad (87)$$

Therefore, the optimization problem solving device 100 selects i expressed by the following Formula (88) to obtain a set S* indicating a combination of subscripts of optimized sparse components.

$$b_i^* = 1 \qquad (88)$$

The following Formula (89) is obtained by using this set S*.

$$z_{S^*}^* = \left(F_{S^*}^T F_{S^*}\right)^{-1} F_{S^*}^T x \qquad (89)$$

The final sparse solution z* is obtained by setting the element of the dimension of the set S* to Formula (89) and the other dimensions to 0. The optimization problem solving device 100 calculates the element of the dimension of the set S* by Formula (89) and sets the other dimensions to 0, thereby generating the final sparse solution z*.

[2-2-6. Example of Flow of L0 Sparse Modeling]

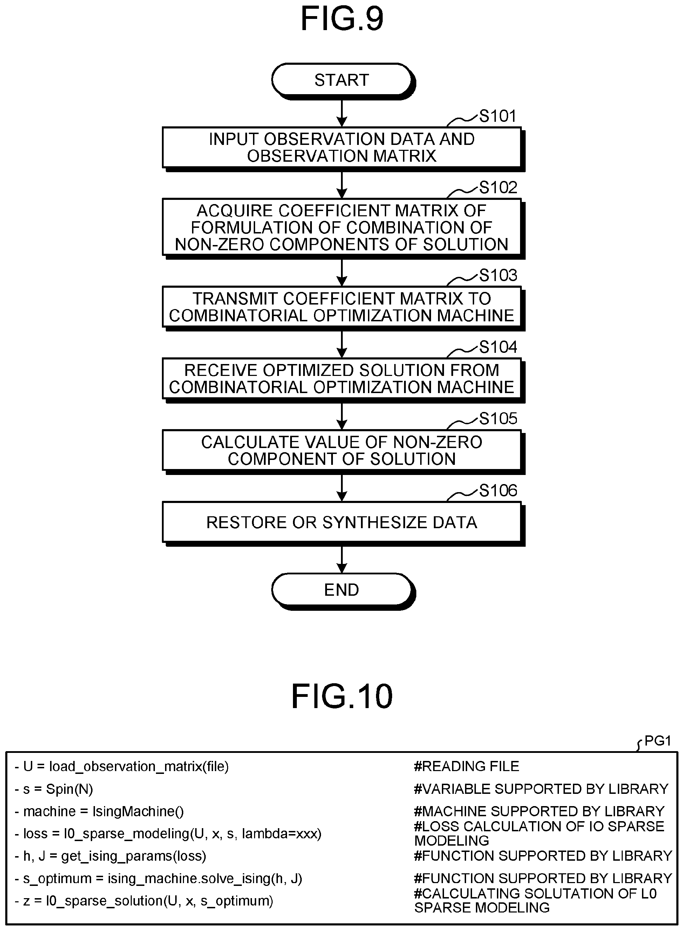

Next, a flow of the L0 sparse modeling will be described with reference to FIG. 9. FIG. 9 is a flowchart illustrating a procedure of processing of the L0 sparse modeling. FIG. 9 illustrates an example of a flow of the L0 sparse modeling by the optimization problem solving system 1 including the Ising machine 10. Hereinafter, a case where the optimization problem solving device 100 is used as a processing subject will be described as an example, but the processing subject is not limited to the optimization problem solving device 100, and any device included in the optimization problem solving system 1 may be used.

As illustrated in FIG. 9, the optimization problem solving device 100 inputs observation data and an observation matrix (Step S101). For example, the optimization problem solving device 100 acquires observation data x and the observation matrix U by the sensor 50. Step S101 is processing corresponding to Formula (4) and the like.

The optimization problem solving device 100 acquires a coefficient matrix of formulation of a combination of non-zero components of a solution (Step S102). For example, the optimization problem solving device 100 generates a coefficient matrix of formulation of a combination of non-zero components of a solution as the Ising parameter. The optimization problem solving device 100 extracts a coefficient matrix in formulation of combinatorial optimization. In Step S102, processing from the L0 sparse modeling to formulation into the QUBO problem and the Ising model described above is performed. Step S102 is processing corresponding to Formula (25), Formula (29), and the like.

The optimization problem solving device 100 transmits the coefficient matrix to the combinatorial optimization machine (Step S103). For example, the optimization problem solving device 100 transmits the coefficient matrix of the formulation of the combination of the non-zero components of the solution as the Ising parameter to the Ising machine 10 selected by the user.

The optimization problem solving device 100 receives an optimized solution from the combinatorial optimization machine (Step S104). For example, the optimization problem solving device 100 receives a solution calculated by the Ising machine 10 as the optimized solution from the Ising machine 10 that has transmitted the Ising parameter. As described above, the optimization problem solving system 1 obtains a combination optimized by the Ising machine 10 that is the combinatorial optimization machine.

The optimization problem solving device 100 calculates a value of the non-zero component of the solution (Step S105). For example, the optimization problem solving device 100 calculates the value of the non-zero component of the solution by using the optimized solution received by the Ising machine 10. The optimization problem solving device 100 calculates a sparse solution based on information of a combination of sparse components. Step S105 is processing corresponding to Formulas (9) to (11) and the like.

The optimization problem solving device 100 restores or synthesizes data (Step S106). For example, the optimization problem solving device 100 uses the calculated value of the non-zero component of the solution to restore or synthesize data according to an application.

[2-2-7. Example of Program of L0 Sparse Modeling]

From here, an example of a program (function) of the L0 sparse modeling will be described with reference to FIGS. 10 to 12. FIG. 10 is a diagram illustrating an example of the program of the L0 sparse modeling. Specifically, FIG. 10 illustrates a program PG1 that is an example of an overall program up to generating a solution of the L0 sparse modeling.

The program PG1 illustrated in FIG. 10 mainly includes the following blocks.

· Generating spin to describe objective function of L0 sparse modeling
· Extracting Ising parameter (first-order and second-order coefficient matrices) from objective function
· Transmitting Ising parameter to Ising machine to receive optimum spin arrangement
· Calculating solution of L0 sparse modeling from optimum spin variable

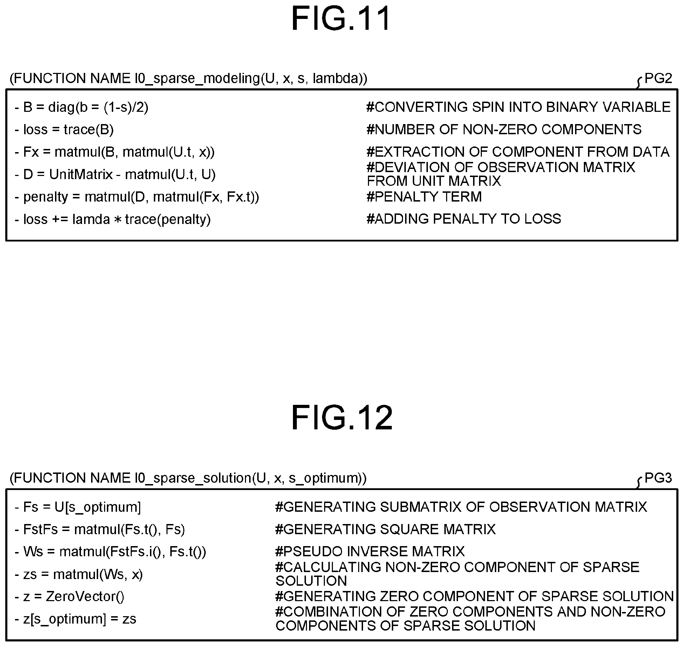

For example, a function "load_observation_matrix(file) " in the first line of the program PG1 reads a file and sets an observation matrix (U in FIG. 11). For example, a function "Spin(N)" in the second line of the program PG1 sets a variable supported by a library. For example, a function "IsingMachine()" in the third line of the program PG1 sets a machine supported by the library.

For example, a function "10_sparse_modeling(U,x,s, lambda=xxx) " in the fourth line of the program PG1 calculates the objective function (also referred to as a loss function or loss) of the L0 sparse modeling as illustrated in FIG. 11.

FIG. 11 is a diagram illustrating an example of a program that generates the objective function of the Ising model. Specifically, FIG. 11 illustrates a program PG2 that is an example of a function for calculating the objective function of the QUBO problem (Ising model). A function "10_sparse_modeling(U,x,s,lambda)" illustrated in FIG. 11 is called by the entire program PG1 in FIG. 10, and generates the objective function (corresponding to loss in FIGS. 10 and 11).

The program PG2 illustrated in FIG. 11 mainly includes the following blocks.

· Using spin variable to create binary variable representing non-zero component
· Creating objective function that becomes larger as number of non-zero components increases
· Creating penalty that increases when observation predicted from observation variable and sparse solution deviates
· Adding objective function and penalty to obtain final objective function

For example, a function "diag(b=(1-s)/2)" in the first line of the program PG2 converts a spin into a binary variable. For example, a function "trace(B)" in the second line of the program PG2 calculates the number of non-zero components. For example, a function "matmul(B,matmul(U.t,x))" in the third line of the program PG2 extracts a component from data. For example, a function "UnitMatrix-matmul(U.t,U)" in the fourth line of the program PG2 obtains a deviation of the observation matrix from the unit matrix. For example, a function "matmul(D,matmul(Fx,Fx.t))" in the fifth line of the program PG2 sets a penalty term. For example, the formula in the sixth line of the program PG2 adds a penalty to the objective function.

A parameter $\lambda$ (corresponding to lambda in FIG. 11) may be set to about 0.5 to 1, or a spin (corresponding to s in FIG. 11) and the parameter $\lambda$ (corresponding to lambda in FIG. 11) may be alternately optimized and obtained as in the Lagrange multiplier method.

For example, a function "get_ising_params (loss)" in the fifth line of the program PG1 is a function supported by the library, and calculates a coefficient matrix (Ising parameter) with an objective function (corresponding to loss in FIG. 11) as an input.

For example, a function "ising_macine.solve_ising(h,J)" in the sixth line of the program PG1 is a function supported by the library, and a calculation result of the Ising machine 10 is obtained using coefficient matrices (h and J in FIG. 11) as an input.

For example, a function "10_sparse_solution(U,x,s_optimum)" in the seventh line of the program PG1 calculates a solution of the L0 sparse modeling as illustrated in FIG. 12.

FIG. 12 is a diagram illustrating an example of a program that generates a solution of the L0 sparse modeling. Specifically, FIG. 12 illustrates a program PG3 that is an example of a function for obtaining a sparse solution from a combination variable. The function "10_sparse_solution(U,x,s_optimum)" illustrated in FIG. 12 is called by the entire program PG1 in FIG. 10 to generate the sparse solution z.

The program PG3 illustrated in FIG. 12 mainly includes the following blocks.

· Generating submatrix of observation matrix by using selected row
· Obtaining sparse solution from pseudo inverse matrix of submatrix

For example, the formula in the first line of the program PG3 generates a submatrix of the observation matrix. For example, a function "matmul(Fs.t(),Fs)" in the second line of the program PG3 generates a square matrix. For example, a function "matmul(FstFs.i(),Fs.t())" in the third line of the program PG3 generates a pseudo inverse matrix. For example, a function "matmul(Ws,x)" in the fourth line of the program PG3 calculates the non-zero component of the sparse solution. For example, a function "ZeroVector()" in the fifth line of the program PG3 generates the zero component of the sparse solution. For example, the formula in the sixth line of the program PG3 combines the zero component of the sparse solution and the non-zero component of the sparse solution to generate the solution.

For example, the optimization problem solving device 100 stores the program (function) as illustrated in FIGS. 10 to 12 and a program (function) called by each program in a function information storage unit 122 (see FIG. 13), and performs processing by using each program.

[2-3. Configuration of Optimization Problem Solving Device]

Next, a configuration of the optimization problem solving device 100 will be described. FIG. 13 is a diagram illustrating an example of the configuration of the optimization problem solving device of the present disclosure.

As illustrated in FIG. 13, the optimization problem solving device 100 includes a communication unit 110, a storage unit 120, a control unit 130, the input unit 140, and the display unit 150.

The communication unit 110 is implemented by, for example, a network interface card (NIC) or the like. Then, the communication unit 110 is connected to a predetermined network (not illustrated) in a wired or wireless manner, and transmits and receives information to and from another information processing device such as the Ising machine 10, the sensor 50, or the like. Furthermore, the communication unit 110 may transmit and receive information to and from a user terminal (not illustrated) used by the user.

The storage unit 120 is implemented by, for example, a semiconductor memory element such as a random access memory (RAM) or a flash memory, or a storage device such as a hard disk or an optical disk. As illustrated in FIG. 13, the storage unit 120 according to the first embodiment includes a data storage unit 121 and the function information storage unit 122.

The data storage unit 121 stores various data such as data received from the sensor 50. The function information storage unit 122 stores information of functions such as various programs. For example, the function information storage unit 122 stores information of various functions (programs) used for optimization problem solving processing and generation processing. For example, the function information storage unit 122 stores function programs such as the programs PG1 to PG3. In addition, the function information storage unit 122 may store information of a function used for processing of the above-described formulas. The storage unit 120 is not limited to the above, and may store various types of information according to the purpose.

The control unit 130 is implemented by, for example, a CPU, a micro processing unit (MPU), or the like executing a program (for example, an optimization problem solving processing program according to the present disclosure) stored in the optimization problem solving device 100 with a random access memory (RAM) or the like as a work area. The control unit 130 is implemented by, for example, an integrated circuit such as an application specific integrated circuit (ASIC) or a field programmable gate array (FPGA).

As illustrated in FIG. 13, the control unit 130 includes a reception unit 131, a first generation unit 132, a second generation unit 133, a transmission unit 134, and a third generation unit 135, and implements or executes a function and an action of information processing described below. Note that the internal configuration of the control unit 130 is not limited to the configuration illustrated in FIG. 13, and may be another configuration as long as the information processing as described later is performed.

The reception unit 131 receives various types of information. The reception unit 131 receives various types of information from an external information processing device. The reception unit 131 receives data from the sensor 50. The reception unit 131 functions as a sensor input unit that inputs the first data from the sensor 50.

The reception unit 131 receives various types of information from the Ising machine 10. The reception unit 131 receives a calculation result of the Ising machine 10 from the Ising machine 10. The reception unit 131 receives the second data as the calculation result from the Ising machine 10 to which the transmission unit 134 has transmitted a coefficient matrix.

The first generation unit 132 generates an objective function by performing the sparse modeling. The first generation unit 132 acquires information from the data storage unit 121 and the function information storage unit 122, and performs the sparse modeling by using the acquired information to generate an objective function. For example, the first generation unit 132 generates an objective function by the program PG2.

The second generation unit 133 generates a coefficient matrix corresponding to the objective function. The second generation unit 133 acquires information from the function information storage unit 122, and generates a coefficient matrix corresponding to the objective function by using the acquired information and the objective function generated by the first generation unit 132. For example, the second generation unit 133 generates a coefficient matrix corresponding to the objective function by the function "get_ising_params (loss)" of the program PG1.

The transmission unit 134 transmits various types of information to another information processing device such as the Ising machine 10 or the sensor 50.

The transmission unit 134 instructs the Ising machine 10 to perform calculation. The transmission unit 134 transmits a parameter of the Ising model to the Ising machine 10. The transmission unit 134 instructs the Ising machine 10 to perform calculation by transmitting the parameter of the Ising model to the Ising machine 10. The transmission unit 134 transmits the coefficient matrix generated by the second generation unit 133 to the Ising machine 10 that performs combinatorial optimization calculation.

The third generation unit 135 generates an optimum solution. The third generation unit 135 generates a solution by using the calculation result of the Ising machine 10 acquired from the Ising machine 10. The third generation unit 135 generates a solution corresponding to the first data by using the second data received by the reception unit 131 from the Ising machine 10. For example, the third generation unit 135 generates an objective function by the program PG3.

Various operations are input from the user to the input unit 140. The input unit 140 receives an input from the user. The input unit 140 may receive various operations from the user via a keyboard, a mouse, or a touch panel provided in the optimization problem solving device 100. The input unit 140 receives selection of the Ising machine 10 by the user. The input unit 140 receives, as an input, an operation of the user for the contents CT1 to CT3 which are presentation screens displayed on the display unit 150.

The display unit 150 displays various types of information. The display unit 150 is a display device such as a liquid crystal display, and displays various types of information. The display unit 150 displays the contents CT1 to CT3 and the like. The optimization problem solving device 100 may include a content generation unit that generates the contents CT1 to CT3 and the like. The content generation unit generates information to be displayed on the display unit 150, such as the contents CT1 to CT3. The content generation unit generates the contents CT1 to CT3 and the like by appropriately using various technologies such as Java (registered trademark). The content generation unit may generate the contents CT1 to CT3 and the like based on a CSS format, a JavaScript (registered trademark) format, or an HTML format. Furthermore, for example, the content generation unit may generate the contents CT1 to CT3 and the like in various formats such as Joint Photographic Experts Group (JPEG), Graphics Interchange Format (GIF), and Portable Network Graphics (PNG).

[2-4. Configuration of Ising Machine]

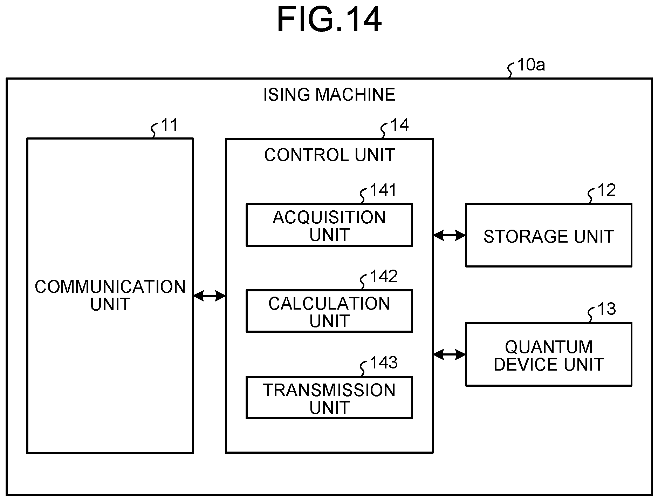

Next, a configuration of the Ising machine 10 that performs calculation will be described. FIG. 14 is a diagram illustrating an example of the configuration of the Ising machine. In the example of FIG. 14, the configuration of the Ising machine 10a that is a quantum computer will be described as an example of the Ising machine 10.

As illustrated in FIG. 14, the Ising machine 10a includes a communication unit 11, a storage unit 12, a quantum device unit 13, and a control unit 14. The Ising machine 10a may include an input unit (for example, a keyboard or a mouse) that receives various operations from an administrator or the like of the Ising machine 10a, and a display unit (for example, a liquid crystal display) for displaying various types of information.

The communication unit 11 is implemented by, for example, an NIC, a communication circuit, or the like. The communication unit 11 is connected to a predetermined network (the Internet or the like) in a wired or wireless manner, and transmits and receives information to and from another device such as the optimization problem solving device 100 via the network.

The storage unit 12 is implemented by, for example, a semiconductor memory element such as a RAM or a flash memory, or a storage device such as a hard disk or an optical disk. The storage unit 12 stores various types of information used for displaying information.

The quantum device unit 13 performs various quantum calculations. For example, the quantum device unit 13 is implemented by a quantum processing unit (QPU). The quantum device unit 13 implements the ground state of the Ising model based on a parameter of the Ising model received from another device such as the optimization problem solving device 100, for example. In other words, the quantum device unit 13 implements optimum spin arrangement in which the Ising model is in the ground energy state. That is, the quantum device unit 13 implements a state in which the optimization problem is optimized.

The quantum device unit 13 includes, for example, a plurality of quantum bits. The quantum device unit 13 is cooled to near absolute 0 degree in advance. After the parameter of the Ising model is input to the quantum device unit 13, the quantum device unit 13 temporally develops a ratio between the Ising model and a transverse magnetic field model (quantum fluctuation model). As a result, optimum spin arrangement according to the parameter of the Ising model is implemented on the quantum device unit 13. As described above, the optimum spin arrangement of the Ising model is physically implemented on the quantum device unit 13. Then, as the quantum device unit 13 is measured, the optimum spin arrangement of the Ising model can be obtained. As a result, the quantum device unit 13 can optimize a discrete optimization problem. For example, the quantum device unit 13 can optimize an optimization problem of an objective function of a binary quadratic form.

The control unit 14 is implemented by, for example, a CPU, an MPU, or the like executing a program stored inside the Ising machine 10a by using a RAM or the like as a work area. Furthermore, the control unit 14 is a controller, and is implemented by, for example, an integrated circuit such as an ASIC or an FPGA.

As illustrated in FIG. 14, the control unit 14 includes an acquisition unit 141, a calculation unit 142, and a transmission unit 143, and implements or executes a function and an action of information processing described below. Note that the internal configuration of the control unit 14 is not limited to the configuration illustrated in FIG. 14, and may be another configuration as long as the information processing as described later is performed.

The acquisition unit 141 receives various types of information. The acquisition unit 141 receives various types of information from an external information processing device. The acquisition unit 141 receives various types of information from another information processing device such as the optimization problem solving device 100.

The acquisition unit 141 performs calculation using the quantum device unit 13, for example, and receives an instruction for measurement from another information processing device such as the optimization problem solving device 100. The acquisition unit 141 receives the parameter of the Ising model as an instruction of calculation (measurement) by the quantum device unit 13.

The acquisition unit 141 acquires various types of information. The acquisition unit 141 acquires information from the storage unit 12. The acquisition unit 141 acquires various types of information from an external information processing device such as the optimization problem solving device 100. The acquisition unit 141 acquires input information received by the input unit. The acquisition unit 141 acquires, for example, information regarding the parameter of the Ising model from an external information processing device. The acquisition unit 141 acquires a measurement result (calculation result) of the quantum device unit 13 by the calculation unit 142.

For example, the acquisition unit 141 receives the coefficients h and J (Ising parameters) of the Ising model, which are a processing result of the function of get_ising_params(loss) of the program PG1, from the optimization problem solving device 100.

The calculation unit 142 performs various calculations. The calculation unit 142 performs calculation using the quantum device unit 13. The calculation unit 142 measures the quantum device unit 13. The calculation unit 142 measures the quantum device unit 13 on which the optimum spin arrangement of the Ising model is implemented.

For example, the calculation unit 142 performs calculation by using the Ising parameter received by the acquisition unit 141 from the optimization problem solving device 100.

The transmission unit 143 transmits various types of information to an external information processing device. For example, the transmission unit 143 transmits various types of information to another information processing device such as the optimization problem solving device 100. The transmission unit 143 transmits information stored in the storage unit 12.

The transmission unit 143 transmits various types of information based on information from another information processing device such as the optimization problem solving device 100. The transmission unit 143 transmits various types of information based on the information stored in the storage unit 12.

The transmission unit 143 transmits the measurement result of the quantum device unit 13 by the calculation unit 142 to a device that has instructed the calculation. The transmission unit 143 transmits the measurement result of the quantum device unit 13 by the calculation unit 142 to a transmission source of the parameter. The transmission unit 143 transmits the measurement result of the quantum device unit 13 by the calculation unit 142 to a calculation request source. The transmission unit 143 transmits the measurement result of the quantum device unit 13 by the calculation unit 142 to another information processing device such as the optimization problem solving device 100.

For example, in the example of FIG. 1, the transmission unit 143 transmits a value of the Ising spin calculated (measured) using the parameter received from the optimization problem solving device 100 to the optimization problem solving device 100.

[2-5. Compressed Sensing]

The compressed sensing to which the optimization problem solving method by the optimization problem solving system 1 is applied will be described below.

In the compressed sensing, it is assumed that the observation matrix U (hereinafter, also referred to as a sparse observation matrix) can be decomposed as in the following Formula (90).

$$U = CA \tag{90}$$

Here, A in Formula (90) is an observation matrix (also referred to as a non-sparse observation matrix A) that models all the observations.

Observation y without dimension thinning can be expressed as the following Formula (91) by using the non-sparse observation matrix A and the sparse expression z.

$$y = Az \tag{91}$$

For example, the non-sparse observation matrix A is a discrete Fourier transform matrix or the like. The non-sparse observation matrix A is determined by a sensing mechanism and cannot be generally controlled.

Meanwhile, C (also referred to as a matrix C) in Formula (90) is a controllable variable. The matrix C is introduced for the purpose of reducing the number of dimensions of observation of Formula (91).

[2-5-1. Combinatorial Optimization Problem]

From here, a point that the compression is regarded as a combinatorial optimization problem will be described. Note that a description of the same points as those described above will be omitted as appropriate.

In the L0 sparse modeling, the observation matrix U has a small correlation between columns, and the closer to a state of being orthogonal to each other, the higher the accuracy of approximation of the L0 sparse modeling. Therefore, it is desirable to use, as the matrix C, a matrix that is converted in such a way that the correlation between the columns of Formula (90) decreases. In addition, in the matrix C, it is desirable to reduce the number of times of observation by reducing the number of dimensions of observation.

It is assumed that a set of subscripts of rows selected from the non-sparse observation matrix A is a set S, a matrix $A_S$ is a matrix including only S rows of the non-sparse observation matrix A, and a matrix $C_S$ is a matrix including only S columns of the matrix C. For example, the matrix $A_S$ is a matrix in which rows corresponding to the respective subscripts included in the set S in the non-sparse observation matrix A are arranged in the order of subscripts. In addition, the matrix $C_S$ is a matrix in which columns corresponding to the respective subscripts included in the set S in the matrix C are arranged in the order of subscripts. In this case, the following Formula (92) is established.

$$U = C_S A_S \tag{92}$$

The degree of deviation of $U^T U$ from an orthogonal matrix can be defined as the following Formula (93).

$$\|I - U^T U\|_F^2 \tag{93}$$

Here, $\| \cdot \|_F$ is the Frobenius norm and is a square norm of all components. In a case where $U^T U$ matches the orthogonal matrix, the value thereof is 0, and this value qualitatively increases as the correlation between the columns increases. Therefore, an index shown in Formula (93) can be regarded as the degree of deviation from the orthogonal matrix.

Here, the matrix $C_S$ for minimizing the following Formula (94) satisfies the following Formula (95).

$$\|I - U^T U\|_F^2 = \|I - A_S^T C_S^T C_S A_S\|_F^2 \tag{94}$$

$$I = A_S^T C_S^T C_S A_S \tag{95}$$

When both sides of Formula (94) are multiplied by a pseudo inverse matrix (if present) from the left and right, the following Formulas (96) and (97) are obtained.

$$(A_S A_S^T)^{-1} A_S A_S^T (A_S A_S^T)^{-1} = (A_S A_S^T)^{-1} A_S A_S^T C_S^T C_S A_S A_S^T (A_S A_S^T)^{-1} \tag{96}$$

$$C_S^T C_S = (A_S A_S^T)^{-1} \tag{97}$$

Since the matrix $C_S$ is a regular matrix, the following Formula (98) may be used.

$$C_S^2 = (A_S A_S^T)^{-1} \tag{98}$$

Here, since $A_S A_S^T$ is a symmetric matrix, diagonalization can be made as in the following Formula (99) .

$$A_S A_S^T = P^{-1} D P \tag{99}$$

It is assumed that the diagonalization has been made as in Formula (99). In this case, the matrix $C_S$ is expressed by Formula (100).

$$C_S = P^{-1} D^{-\frac{1}{2}} P \tag{100}$$

In a case of using the matrix $C_S$ of Formula (100), the minimum value of the deviation from the orthogonal matrix is expressed as the following Math. (101).

$$\|I - A_S^T(A_S A_S^T)^{-1}A_S\|_F^2 \qquad (101)$$

As a result, the optimization of the compression can be considered as a combinatorial optimization problem as in the following Formula (102). The optimization problem solving device 100 can formulate the optimization of the compression as a combinatorial optimization problem like Formula (102).

$$S^* = \arg\min_S[\|I - A_S^T(A_S A_S^T)^{-1}A_S\|_F^2 + \lambda(|S| - N)^2] \qquad (102)$$

This formulation is formulation in which the observation dimensions are fixed and an optimum dimension is selected therefrom, but there may be other formulations in a case where it is desired to reduce the number of observation dimension as much as possible. In this case, it is sufficient if the second term is |S|.

Here, similarly to a case of the L0 sparse modeling, the following Formula (103) is used.

$$A_S^T(A_S A_S^T)^{-1}A_S = A^T B(I - B + BAA^T B)^{-1}BA \qquad (103)$$

In the optimization of the compressed sensing from the relational formula of Formula (103), the optimization problem solving device 100 can also perform formulation with a binary combinatorial optimization problem like the following Formula (104).

$$B^* = \arg\min_B\{\|I - A^T B(I - B + BAA^T B)^{-1}BA\|_F^2 + \lambda(\text{tr}(B) - N)^2\} \qquad (104)$$

[2-5-2. QUBO Form]

B in Formula (104) is desired to be expressed in a quadratic form. For example, the optimization problem solving device 100 converts Formula (104) into a quadratic form of B.

For example, a case where the non-sparse observation matrix A is a discrete Fourier transform or the like corresponds to the condition shown in the following Formula (105).

$$I = AA^T \qquad (105)$$

In the case of Formula (105), simple formulation can be made as in the following Formula (106).

$$B^* = \arg\min_B\{\|I - A^T BA\|_F^2 + \lambda(\text{tr}(B) - N)^2\} \qquad (106)$$

In addition, in a case where the eigenvalue of $D = I - AA^T$ is smaller than 1, it can be expressed as the following Formula (107).

$$(I - B + BAA^TB)^{-1} = \lim_{K \to \infty} \sum_{k=1}^{K} (BDB)^k \tag{107}$$

Then, in a case of being approximated by K = 1, conversion can be performed as in the following Formula (108) .

$$\|I - A^TB(I - B + BAA^TB)^{-1}BA\|_F^2 \approx \|I - A^TBDBA\|_F^2 \tag{108}$$

Formula (108) is quartic with respect to B. However, it is possible to easily reduce the number of dimensions and perform conversion into a quadratic expression by processing similar to the dimension reduction described in the L0 sparse modeling, [2-2-5-4. L0 Sparse Modeling in QUBO Form], and the like. As described above, since the processing is similar to the processing in the L0 sparse modeling described above, a detailed description is omitted, but for example, the optimization problem solving device 100 reduces the number of dimensions of B in Formula (108) to 2 dimensions.
For series expansion and truncated approximation of the inverse matrix, it is desirable that the eigenvalue (spectrum norm) of the maximum absolute value of D = I - AA$^T$ is 1 or less.
Similarly to the L0 sparse model, it is also possible to implement the series expansion by taking in the effect of regularization. By adding the regularization term to the original optimization formula, the inverse matrix is replaced with the following Formula (109), and the eigenvalue is multiplied by 1/(1 + y) in total.

$$(I - B + BAA^TB)^{-1} \to ((1 + \gamma)I - BDB)^{-1}$$
$$= \frac{1}{1 + \gamma}\left(I - \frac{1}{1 + \gamma}BDB\right)^{-1} \tag{109}$$

As a result, it is possible to reduce the absolute value of the eigenvalue of (I - AA$^T$)/(1 + y) by the adjustment of the regularization and implement a condition that enables the series expansion or truncated approximation of the inverse matrix.
In the above example, the method of obtaining the optimum solution by approximating the inverse matrix has been described. However, the optimization problem solving device 100 is not limited to the above method, and may perform conversion into the QUBO problem by various methods. This will be described below.
For example, similar to the example of the L0 sparse modeling, the inverse matrix can be eliminated from an optimization formula by using the auxiliary variable. The second term of Formula (104) of the optimization including the inverse matrix described above will be considered again by using the following Formula (110).

$$L(B) = \|I - A^TB(I - B + BAA^TB)^{-1}BA\|_F^2 \tag{110}$$

Here, the auxiliary variable is introduced as in the following Formula (111).

$$Z = B(I - BDB)^{-1}BA = ((D - DBD)^{-1} - D^{-1})A \tag{111}$$

The second equal sign uses the Woodbury formula of the inverse matrix.
Here, Z in Formula (111) is a matrix having the same size as the non-sparse observation matrix A. Then, instead of the first term of Formula (104), an objective function including the following Lagrange multiplier term can be considered as Formula (112) below.

$$L(B, Z, W) = -A^TZ - W^T\big((D - DBD)Z - DBA\big) \tag{112}$$

Here, W in Formula (112) is a matrix having the same size as Z. In a form including the Lagrange multiplier term of Formula (112), it can be expressed as the following Formula (113).

$$B^*, Z^*, W^* = \arg \min_{B,z,w}\{L(B,Z,W) + \lambda(\mathrm{tr}(B) - N)^2\} \qquad (113)$$

This optimization can be solved by alternating optimization of B, Z, and W. The alternating optimization is implemented by the following pseudo algorithm.

(4-1) Initializing Z and W (random initialization, zero initialization, or the like)

(4-2) Fixing Z and W, and obtaining B using Ising machine

(4-3) Fixing B and updating Z and W

For example, when a steepest descent method is used, update is made as in the following Formulas (114) and (115) .

$$Z \leftarrow Z + \eta(A + (D - DBD)W) \qquad (114)$$

$$W \leftarrow W - \eta((D - DBD)Z - DBA) \qquad (115)$$

(4-4) Repeating (4-2) and (4-3) until value of objective function of optimization converges or until (2-2) and (2-3) are performed a predetermined number of times.

[2-5-3. Optimization of Compressed Sensing by Ising Model]

As described above, it is easy to embed the QUBO problem in the Ising model if the optimization of the compressed sensing is formulated as a combination optimum problem of binary variables and further converted into a QUBO problem.

First, the optimization problem solving device 100 converts the binary variable into the spin variable in order to convert the QUBO problem into the Ising model. For this, the following Formula (116) is used.

$$\sigma_i = 1 - 2b_i \qquad (116)$$

The optimization problem solving device 100 converts the QUBO problem into a quadratic form of the spin variable, that is, the Ising model, according to Formula (116). Therefore, for the Ising model formulated in this way, the optimization problem solving device 100 extracts a coefficient matrix by using a program or the like. Then, the optimization problem solving device 100 uses the extracted coefficient matrix to set an inter-spin coupling constant of the Ising machine 10 and a local magnetic field. Then, the Ising machine 10 performs annealing processing, calculates a combination $(\sigma_1^*, ..., \sigma_M^*, ...)$ of basis spins of the Ising model, and transmits the combination to the optimization problem solving device 100. The optimization problem solving device 100 receives the combination of the basis spins of the Ising model calculated by the Ising machine 10.

The optimization problem solving device 100 can obtain an optimized binary variable from the combination of the basis spins by using the following Formula (117).

$$b_i^* = (1 - \sigma_i^*)/2 \qquad (117)$$

Therefore, the optimization problem solving device 100 selects i expressed by the following Formula (118) to obtain a set S* indicating a combination of subscripts of optimized sparse components.

$$b_i^* = 1 \qquad (118)$$

The following Formula (119) is obtained by using this set S*.

$$C_{S^*}^2 = \left(A_{S^*} A_{S^*}^T\right)^{-1} \qquad (119)$$

Then, if the diagonalization is made as in the following Formula (120), an optimum compression method is obtained as in the following Formula (121).

$$A_{S^*} A_{S^*}^T = P^{-1} D P \qquad (120)$$

$$C_{S^*} = P^{-1} D^{-\frac{1}{2}} P \qquad (121)$$

A dimensionality reduction matrix C to be finally obtained is a matrix in which a column component other than an S* column component is a zero vector. Therefore, the optimization problem solving device 100 first initializes the dimensionality reduction matrix C to 0, and substitutes $C_{S^*}$ obtained by Formula (121) into a submatrix C(S*) by the S* column of the dimensionality reduction matrix C, thereby generating the dimensionality reduction matrix C. For example, the optimization problem solving device 100 generates the dimensionality reduction matrix C by substituting $C_{S^*}$ obtained by Formula (121) into a column corresponding to each subscript included in the set S* among the columns of the dimensionality reduction matrix C initialized to 0.

[2-5-4. Example of Flow of Compressed Sensing Optimization]

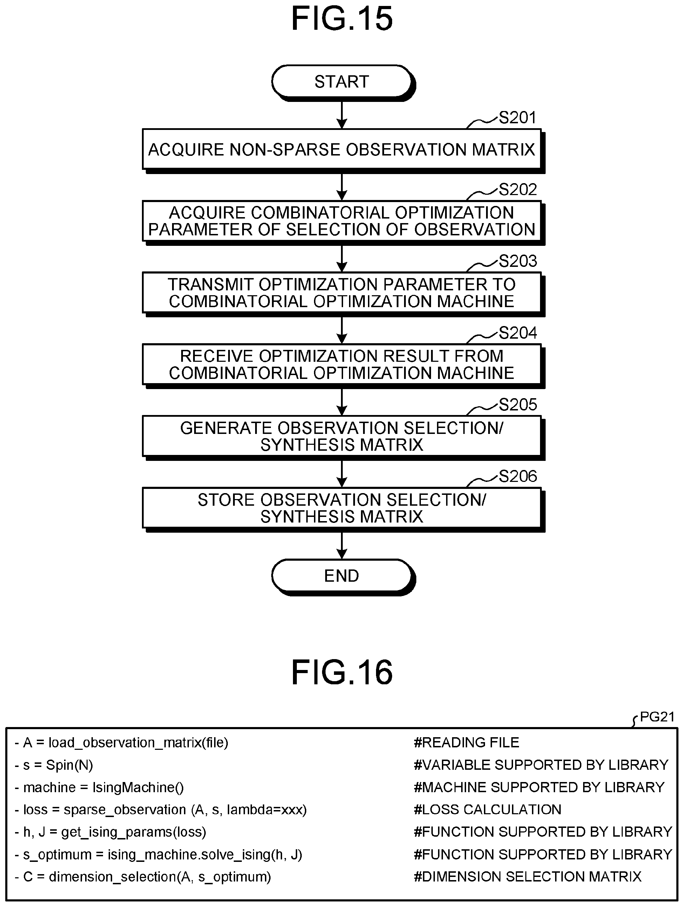

Next, a flow of compressed sensing optimization will be described with reference to FIG. 15. FIG. 15 is a flowchart illustrating a procedure of the compressed sensing optimization processing. FIG. 15 illustrates an example of a flow of the L0 sparse modeling by the optimization problem solving system 1 including the Ising machine 10. Hereinafter, a case where the optimization problem solving device 100 is used as a processing subject will be described as an example, but the processing subject is not limited to the optimization problem solving device 100, and any device included in the optimization problem solving system 1 may be used.

As illustrated in FIG. 15, the optimization problem solving device 100 acquires a non-sparse observation matrix (Step S201). Step S201 is processing corresponding to Formula (90) and the like.

The optimization problem solving device 100 acquires a combinatorial optimization parameter of selection of observation (Step S202). The optimization problem solving device 100 extracts a coefficient matrix in formulation of combinatorial optimization. In Step S202, processing from the compressed sensing optimization to the formulation into the QUBO problem and the Ising model is performed. Step S202 is processing corresponding to Formula (104), Formula (106), and the like.

The optimization problem solving device 100 transmits the optimization parameter to the combinatorial optimization machine (Step S203). The optimization problem solving device 100 receives an optimization result from the combinatorial optimization machine (Step S204). That is, the optimization problem solving system 1 obtains a combination optimized by the Ising machine 10 that is the combinatorial optimization machine. As described above, the optimization problem solving system 1 uses the Ising machine 10 to increase the search efficiency and implement high-speed search of the reduced dimensionality.

The optimization problem solving device 100 generates observation selection and a synthesis matrix (Step S205). The optimization problem solving device 100 generates selected dimension information indicating dimension selection and the synthesis matrix based on dimension combination information. For example, the optimization problem solving device 100 generates the set S indicating the selected dimension as observation selection information. Furthermore, for example, the optimization problem solving device 100 generates the dimensionality reduction matrix C as the synthesis matrix. Step S202 is processing corresponding to Formula (98), Formula (100), and the like. The optimization problem solving device 100 stores the observation selection and the synthesis matrix (Step S206). The optimization problem solving device 100 stores the selected dimension information and the synthesis matrix.

[2-5-5. Example of Program of Compressed Sensing Optimization]

From here, an example of a program (function) of the compressed sensing optimization will be described with reference to FIGS. 16 to 18. In the program of the compressed sensing optimization in FIGS. 16 to 18, points and the like similar to those of the program of the L0 sparse modeling in FIGS. 10 to 12 will be omitted as appropriate. FIG. 16 is a diagram illustrating an example of the program of the compressed sensing optimization processing. Specifically, FIG. 16 illustrates a program PG21 that is an example of the overall program of the compressed sensing optimization processing.

The program PG21 illustrated in FIG. 16 mainly includes the following blocks.

· Generating spin to describe objective function
· Extracting Ising parameter from objective function
· Transmitting Ising parameter to Ising machine to receive optimum spin arrangement
· Acquiring dimension selection matrix from optimum spin variable

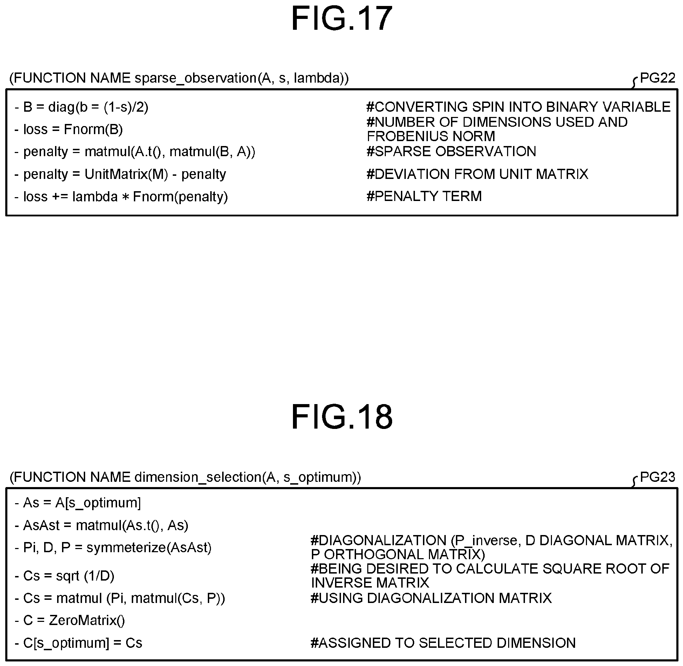

For example, a function "sparse_observation(A,s,lambda=xxx)" in the fourth line of the program PG21 calculates an objective function of the L0 sparse modeling as illustrated in FIG. 17.

FIG. 17 is a diagram illustrating an example of a program that generates the objective function of the Ising model. FIG. 17 illustrates a program PG22 that is an example of a function for calculating the objective function of the QUBO (Ising model). A function "sparse_observation(A,s,lambda)" illustrated in FIG. 17 is called by the entire program PG21 in FIG. 17, and generates the objective function (corresponding to loss in FIGS. 16 and 17).

The program PG22 illustrated in FIG. 17 mainly includes the following blocks.

· Using spin variable to create binary variable representing selection of observation dimension
· Creating an objective function that becomes larger as number of dimensions used increases
· Creating penalty that increases when sparse observation matrix deviates from unit matrix
· Adding objective function and penalty to obtain final objective function

For example, a function "Fnorm(B)" in the second line of the program PG22 is the Frobenius norm and calculates the number of dimensions used. For example, a function "matmul(A.t(),matmul(B,A))" in the third line of the program PG22 obtains a penalty of sparse observation. For example, a function "UnitMatrix(M)-penalty" in the fourth line of the program PG22 obtains a deviation of the observation matrix from the unit matrix. For example, the formula in the fifth line of the program PG22 adds a penalty to the objective function.

A parameter $\lambda$ (corresponding to lambda in FIG. 17) may be set to about 0.5 to 1, or a spin (corresponding to s in FIG. 17) and the parameter $\lambda$ (corresponding to lambda in FIG. 17) may be alternately optimized and obtained as in the Lagrange multiplier method.

For example, a function "dimension_selection(A,s_optimum)" in the seventh line of the program PG1 calculates a dimension selection matrix as illustrated in FIG. 18.

FIG. 18 is a diagram illustrating an example of a program that obtains a measurement control matrix. Specifically, FIG. 18 illustrates a program PG23 that is an example of a function for obtaining the measurement control matrix from the combination variable. The function "dimension_selection(A,s_optimum)" illustrated in FIG. 18 is called by the entire program PG1 in FIG. 18 to generate the matrix C.

The program PG23 illustrated in FIG. 18 mainly includes the following blocks.

· Generating dimension selection and synthesis matrix by using selected row
· Using matrix diagonalization, etc.

For example, the formula in the first line of the program PG23 generates a submatrix of the non-sparse observation matrix A. For example, a function "matmul(As.t(),As)" in the second line of the program PG23 generates a square matrix. For example, a function "symmeterize(AsAst)" in the third line of the program PG23 performs diagonalization. For example, "D" of the program PG23 indicates a diagonal matrix, and "P" indicates an orthogonal matrix. For example, a function "sqrt(1/D)" in the fourth line of the program PG23 obtains a square root of the inverse matrix. For example, a function "matmul(Pi,matmul(Cs,P))" in the fourth line of the program PG23 performs processing using the diagonal matrix. For example, a function "ZeroVector()" in the sixth line of the program PG23 generates the zero component of the dimension selection matrix. For example, the formula in the seventh line of the program PG23 is assigned to the selected dimension to generate the dimension selection matrix.

For example, the optimization problem solving device 100 stores the program (function) as illustrated in FIGS. 16 to 18 and a program (function) called by each program in a function information storage unit 122 (see FIG. 13), and performs processing by using each program.

[3. Other Embodiments]

In addition, the optimization problem solving system 1 described above may be used for various applications. Hereinafter, embodiments to which the optimization problem solving system 1 is applied will be described.

[3-1. Second Embodiment (RFID)]

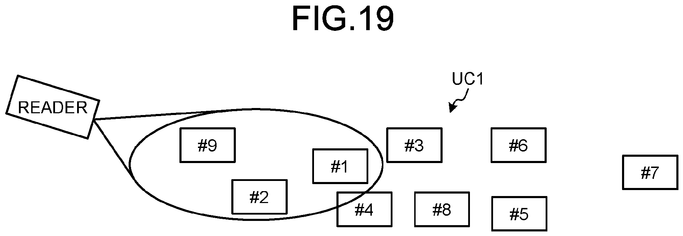

The optimization problem solving system 1 may be applied to radio frequency identification (RFID) using near field communication (NFC). An example of this point will be briefly described with reference to FIG. 19. FIG. 19 is a diagram illustrating a second embodiment to which the optimization problem solving system is applied. A use scene UC1 in FIG. 19 indicates a use scene in a case where the optimization problem solving system 1 is used for RFID.

First, RFID will be briefly described. RFID is a technology in which a host-side communication device called a reader emits radio waves of a predetermined frequency to detect a peripheral terminal (a card or a tag). Usually, a terminal-side communication device returns reflected waves in which unique identification information is superimposed on the radio waves from the reader, and the reader identifies the peripheral terminal based on the received reflected waves.

Here, a situation in which there are a plurality of peripheral terminals is considered. In normal RFID, according to a protocol defined in a standard, peripheral terminals sequentially establish communication with the reader and return respective pieces of identification information. However, in a case of such identification information by time division, as the number of terminals increases, detection may not be possible until a timeout period in which all the terminals are set.

Therefore, for example, it is considered that the terminals return the identification information simultaneously (at the same clock timing) with respect to polling from the reader. In this case, the identification information from the terminals received by the reader is superposition of the reflected waves from the respective terminals. The example of FIG. 19 illustrates a case where the reader receives the identification information from three terminals corresponding to tags #1, #2, and #9 among nine terminals corresponding to tags #1 to #9.

Identification information of a tag j is represented by a D-dimensional vector like $u_j$. That is, it is assumed that the identification information is D bits. Then, when signal intensities corresponding to D bits from the tag j received by the reader are collectively expressed, $z_j u_j$ is obtained by multiplying $u_j$ by a constant. However, $z_j$ is a non-zero value if the tag j is within a detection range (a circle surrounding the tags #1, #2, and #9 in FIG. 19) of the reader, and $z_j$ is 0 if the tag j is outside the detection range. $u_j$ is a bit string to represent information, but is assumed to be a code string of $\pm 1$ for convenience.

If the tag in the detection range is only a part of all N tags, the vector z is a sparse vector. Assuming that the pieces of identification information of all N tags are registered in advance, the matrix U in which these pieces of identification information are arranged in columns is considered. That is, the identification information is expressed as the following Formula (122).

$$U = [u_1, u_2 \dots u_N] \qquad (122)$$

For example, if the bit length of the identification information of the tag is 5 and the total number of tags is 6, the matrix U is a matrix as in the following Formula (123).

$$U = \begin{pmatrix} -1 & 1 & -1 & 1 & 1 & -1 \\ 1 & 1 & -1 & -1 & 1 & 1 \\ -1 & -1 & -1 & -1 & 1 & 1 \\ 1 & -1 & -1 & 1 & -1 & -1 \\ 1 & 1 & 1 & 1 & -1 & -1 \end{pmatrix} \qquad (123)$$

A signal intensity received by the reader is expressed as x = Uz by using the matrix U of Formula (123) and the vector z. At this time, a task of simultaneous reading of the RFID by the reader is formulated as in the following Formulas (124) and (125).

$$z^* = \arg\min_{z}\|z\|_0 \quad \text{subject to} \quad x = Uz \tag{124}$$

$$P^* = \{j : z_j^* \neq 0\} \tag{125}$$

Here, P in Formula (125) is a set of tags whose signal intensities are not 0. Since this problem is the L0 sparse modeling problem, formulation of the following Formula (126) can be made as optimization represented by the combination variable.

$$B^* = \arg\min_{B}\{\mathrm{tr}(B) - \lambda\mathrm{tr}(B(I - B + BU^TUB)^{-1}BU^Txx^TU)\} \tag{126}$$

B in Formula (126) is a diagonal matrix having a binary variable representing whether the sparse vector is zero or non-zero as the diagonal component, similarly to the above-described example. The method described above can be followed as a method of making the formulation of the combinatorial optimization into a quadratic form according to the Ising model. For example, the optimization problem solving device 100 reduces the number of dimensions of B in Formula (126) and performs conversion into a quadratic form.

For example, under the condition that the maximum eigenvalue of the absolute value of I-$U^T$U is sufficiently smaller than 1, approximation can be performed as in the following Formula (127).

$$B^* = \arg\min_{B}\{\mathrm{tr}(B) - \lambda\mathrm{tr}(B(I - U^TU)BU^Txx^TU)\} \tag{127}$$

Since Formula (127) is in a quadratic form of a binary combination variable, if the binary variable is converted into the spin variable, embedding in the Ising model becomes easy. The identification information shown in Formula (122) is configured by an appropriate method.

As an optimum selection method, the above-described compressed sensing optimization is used. Hereinafter, for simplicity, a case where the number of tags is represented by a power of 2 and the observation matrix A without compression is a Hadamard matrix will be described as an example. At this time, since row vectors are orthogonal, as optimization of a combination variable representing selection or unselection of a row of the observation matrix A, the formulation is made as in the following Formula (128).

$$B^* = \arg\min_{B}\{\|B\|_F^2 - \lambda\|I - A^TBA\|_F^2\} \tag{128}$$

The optimization problem solving device 100 selects an optimum row while adjusting a term for compressing the first term as much as possible and a term for reducing the correlation of the column of the second term as much as possible as a constant given the parameter λ, and can optimize the identification information by using this.

As another optimization method, there is also a method of selecting an optimum row in a state in which the number of bits is constant. In this case, the objective function is changed, resulting in an optimization problem as in the following Formula (129).

$$B^* = \arg\min_{B}\{\|I - A^TBA\|_F^2 + \lambda(\mathrm{tr}(B) - D)^2\} \tag{129}$$

Even in this case, since the optimization is performed in the range of the quadratic form of the binary variable, if the binary variable is converted into the spin variable, embedding in the Ising model can be made.

[3-2. Third Embodiment (Extension of Second Embodiment)]

The optimization problem solving system 1 may be applied to spread spectrum communication, code division multiple access (CDMA), or the like by extending the second embodiment. An example of this point will be briefly described below.

In the extension to the spread spectrum communication, code multiplex connection, or the like, the identification information $u_j$ of the tag is a spreading code, and the subscript j of the tag is considered to be one for a multiplexed channel.

A code of the j-th component $z_j$ of the sparse solution $z^*$ periodically changes corresponding to a code of multiplexed information. Therefore, information transmitted on a channel j can be read by reading the code of $z_j$. This spread spectrum can be used to simultaneously receive information from the terminals on the base station side during uplink.

Assuming that all spreading codes are known, and assuming that there are few channels used at the same time, on the base station side, the sparse solution $z^*$ is obtained by the sparse modeling, and information transmitted for each channel is read from a code of each component. It is sufficient if the optimization of the spreading code is performed by the same method as the RFID identification information described in the second embodiment, and thus a description thereof will be omitted.

[3-3. Fourth Embodiment (Target Detection)]

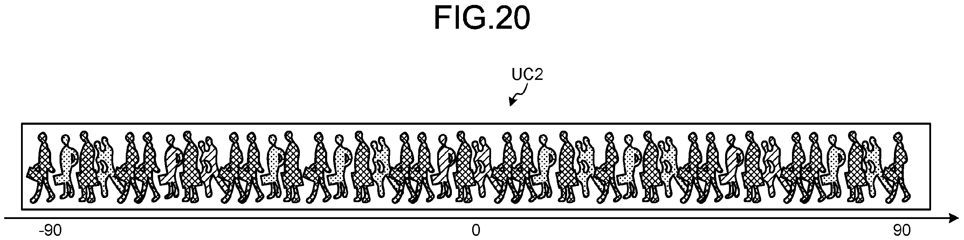

The optimization problem solving system 1 may be applied to target detection by an array radar or LIDAR. For example, the optimization problem solving system 1 may be used for detecting an obstacle in front of a vehicle by an in-vehicle radar or LIDAR. An example of this point will be briefly described with reference to FIGS. 20 to 22. FIGS. 20 to 22 are diagrams illustrating a fourth embodiment to which the optimization problem solving system is applied.

A use scene UC2 in FIG. 20 indicates a use scene in a case where the optimization problem solving system 1 is used for target detection. Specifically, the use scene UC2 in FIG. 20 is an image of an obstacle in a direction from an azimuth angle of -90 degrees to 90 degrees in front of the vehicle, and illustrates a case where there are obstacles with various depths and moving speeds as an example.

When an incoming wave from an obstacle (target) (an incoming wave that is a reflected wave for a radar) is measured using the radar, a distance to the obstacle (target), an angle, and a velocity component can be known. When only an incoming wave whose distance and speed are within predetermined ranges is selected in advance, only targets that move by the same distance and at the same speed are selected, and thus, the position of the target only needs to obtain an angle component of the incoming wave.

Target azimuth angle estimation based on a reception signal of an array radar by sparse modeling is disclosed in, for example, the following literature.

· A Sparse Signal Reconstruction Perspective for Source Localization With Sensor Arrays, Dmitry Malioutov et al. <http://ssg.mit.edu/~willsky/publ_pdfs/175_pub_IEEE.pdf>

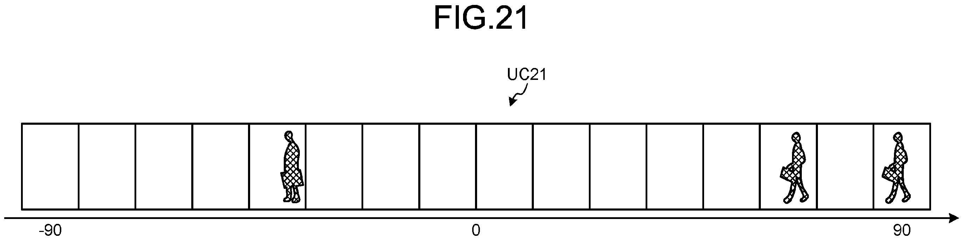

When the sparse modeling is used according to the method of the above literature, for the angle of the incoming wave, 180 degrees from -90 degrees to 90 degrees of the front side are discretized into a grid in increments of 1 degree, for example. Then, a use scene UC21 in FIG. 21 becomes a sparse vector (a non-zero component when there is a target, and a zero component when there is no target).

Information of an incoming wave generated from the sparse vector is received by an array radar having a plurality of antennas. At this time, if an observation matrix (direction matrix) that generates reception signals of incoming waves received by a plurality of antennas is known, a target can be detected using an azimuth angle with a resolution higher than the number of antennas by using the sparse modeling.

As described above, detecting a target at a grid azimuth angle with a higher resolution with a relatively small number of antennas using the sparse modeling is super-resolution of the azimuth angle of the incoming wave in the radar.

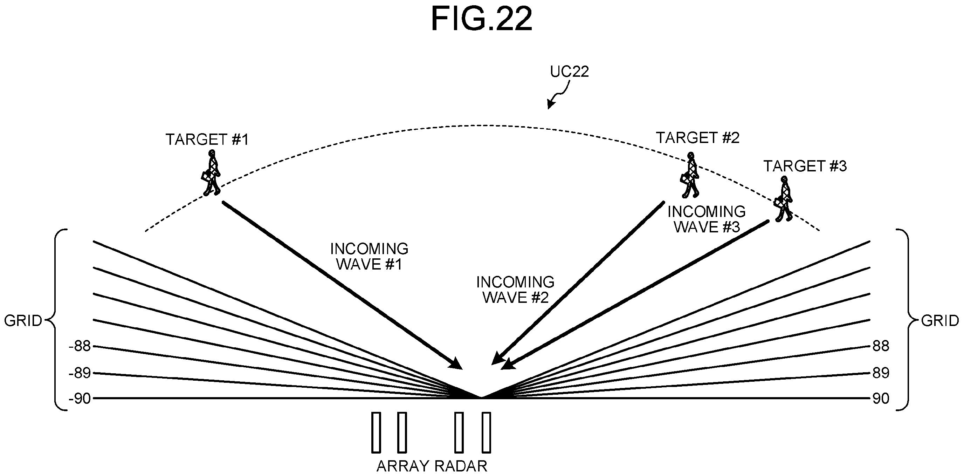

A use scene UC23 in FIG. 22 illustrates the above content in a two-dimensional image. Regarding the use scene UC23 in FIG. 22, an observation matrix for generating a reception signal of the radar array and reception signal information of an incoming wave are necessary for handling by the sparse modeling.

In a case of the array radar, the observation matrix U is expressed as a matrix in which steering vectors $u(\theta_k)$ related to an arrival angle $\theta_k$ are arranged in a column direction as in the following Formulas (130) and (131).

$$U = [u(\theta_1), u(\theta_2), \cdots, u(\theta_M)] \tag{130}$$

$$u(\theta) = \left[ e^{j\frac{2\pi d_0 sin\theta}{\lambda}}, e^{j\frac{2\pi d_1 sin\theta}{\lambda}} \cdots e^{j\frac{2\pi d_{N-1} sin\theta}{\lambda}} \right]^T \tag{131}$$

Here, M in Formula (130) corresponds to the number of angle discrete grids, and is 180 in FIG. 22. N in Formula (131) represents the number of receiving antennas of the array radar, and is, for example, 10. $d_k$ in Formula (131) represents a distance from the rightmost antenna to the k-th antenna in the drawing, and is often set to, for example, the following Formula (132) in order to reduce aliasing and the like.

$$d_k = k\lambda/2 \tag{132}$$

At this time, a reception signal x of the incoming wave is modeled by the following Formula (133) using the vector z of the zero/non-zero component related to each grid and the observation matrix A.

$$x = Az \tag{133}$$

Then, a problem of estimation of the arrival angle of the radar by the sparse modeling (L1 sparse modeling) is formulated as the following Formula (134).

$$\min_{z} \|z\|_1 \quad s.t \quad x = Az \tag{134}$$

As described above, in the conventional method, normal L1 sparse modeling (also referred to as Lasso) has been used in a case where a reception signal of an incoming wave is received once and an azimuth angle of a target is estimated from the reception signal.

On the other hand, in the present disclosure, since the condition under which the L1 sparse modeling reaches the true solution is stricter than the condition under which the L0 sparse modeling reaches the true solution, the L0 sparse modeling is adopted also in this case as in the following Formula (135).

$$\min_{z} \|z\|_0 \quad s.t \quad x = Az \tag{135}$$

While the conventional method is for a problem of minimizing the L1 norm $\|z\|_1$, the fourth embodiment is for a problem of minimizing the L0 norm $\|z\|_0$.

In the L0 sparse modeling and the L1 sparse modeling, the observation matrix, the reception signal, and the sparse solution are complex numbers. In a complex coordinate space, a Hermitian conjugate is used instead of transposition of a matrix or a vector. As a result, the optimization problem solving device 100 can perform formulation of the following Formula (136) (a symbol T of transposition is a symbol † of the Hermitian conjugation) as optimization representing the L0 sparse modeling with a combination variable.

$$B^* = \arg\min_{B}\{\mathrm{tr}(B) - \lambda\mathrm{tr}(B(I - B + BA^\dagger AB)^{-1}BA^\dagger xx^\dagger A)\} \tag{136}$$

B in Formula (136) is a diagonal matrix having a binary variable representing whether the sparse vector is zero or non-zero as the diagonal component, similarly to the above-described example.

The method described above can be followed as a method of making the formulation of the combinatorial optimization into a quadratic form according to the Ising model. For example, the optimization problem solving device 100 reduces the number of dimensions of B in Formula (136) and performs conversion into a quadratic form.

For example, under the condition that the maximum eigenvalue of the absolute value of I-A†A is sufficiently smaller than 1, approximation can be performed as in the following Formula (137).

$$B^* = \arg\min_{B}\{\mathrm{tr}(B) - \lambda\mathrm{tr}(B(I - A^\dagger A)BA^\dagger xx^\dagger A)\} \tag{137}$$

Since Formula (137) is in a quadratic form of a binary combination variable, if the binary variable is converted into the spin variable, embedding in the Ising model becomes easy.

In the super-resolution of the radar in the above literature, it is also considered that the super-resolution is performed with a plurality of snapshots.

In this case, the reception signal is expressed by the following Formula (139) using matrices X and Z in which a single reception signal x and its solution z expressed by the following Formula (138) are arranged in the column direction by the number of snapshots.

$$x = Az \tag{138}$$

$$X = AZ \tag{139}$$

In the above literature, actually, the reception signals corresponding to the number of snapshots are subjected to singular value decomposition to model a reception signal component using a basis vector corresponding to a singular value having a large absolute value. Specifically, the singular value decomposition is performed as in the following Formula (140), and K bases are selected in descending order of the absolute value of the singular value to obtain the following Formula (141).

$$X = USV \tag{140}$$

$$X_{\mathrm{SV}} = \sum_{k=1}^{K} \sigma_k U_k \tag{141}$$

Z is also a matrix $Z_{\mathrm{SV}}$ in which K (instead of the number of snapshots) bases are arranged in the column direction. Then, the L1 sparse modeling problem is expressed by the group Lasso as in the following Formula (142).

$$\min_{z_{\mathrm{SV}}}\|(\|(z_{\mathrm{SV}})_1\|_2^2, \|(z_{\mathrm{SV}})_2\|_2^2 \ \ldots \ \|(z_{\mathrm{SV}})_N\|_2^2)\|_1 \ \ \mathrm{s.t} \ \ X_{\mathrm{SV}} \\ = Az_{\mathrm{SV}} \tag{142}$$

However, the following Math. (143) is an L2 norm of a vector by the i row of $z_{\mathrm{SV}}$.

$$\|(z_{\mathrm{SV}})_i\|_2^2 \tag{143}$$

When Formula (142) is expressed by the L0 sparse modeling, it can be expressed as the following Formula (144) .

$$\min_{\boldsymbol{z}_{\text{SV}}} \| (\|(\boldsymbol{z}_{\text{SV}})_1\|_2^2, \|(\boldsymbol{z}_{\text{SV}})_2\|_2^2 \ \dots \ \|(\boldsymbol{z}_{\text{SV}})_N\|_2^2) \|_0 \quad \text{s.t} \quad \boldsymbol{X}_{\text{SV}} = \boldsymbol{A}\boldsymbol{z}_{\text{SV}} \tag{144}$$

The L0 sparse modeling in consideration of such a group element is expressed as the following Formula (145).

$$B^* = \arg\min_B \left\{ \text{tr}(B) - \lambda \text{tr}\left(B\left(I - B + BA^\dagger AB\right)^{-1} BA^\dagger XX^\dagger A\right) \right\} \tag{145}$$

X in Formula (145) may be obtained by arranging snapshots as they are, or may be $X_{SV}$ in which K bases are selected in descending order of the absolute value of the singular value.

Further, under the condition that the maximum eigenvalue of the absolute value of I-$A^\dagger$A is sufficiently smaller than 1, approximation can be performed as in the following Formula (146).

$$B^* = \arg\min_B \left\{ \text{tr}(B) - \lambda \text{tr}\left(B\left(I - A^\dagger A\right)BA^\dagger XX^\dagger A\right) \right\} \tag{146}$$

In this approximation, the objective function is in a quadratic form of a binary variable, and the binary variable can be converted into the spin variable, thereby enabling embedding in the Ising model. In this way, in the fourth embodiment, not only extension to a real coordinate space but also extension to the complex coordinate space can be made, and extension can be made in such a way as to impose a group constraint on the solution. The number of array radars may be determined (set) by an appropriate method. A method of optimally selecting the array radar utilizes the above-described compressed sensing optimization.

[3-4. Fifth Embodiment (Image Diagnosis)]

The optimization problem solving system 1 may be applied to the field of image diagnosis such as MRI. This point will be briefly described using MRI as an example with reference to FIG. 23. The application of the optimization problem solving system 1 is not limited to MRI, and the optimization problem solving system 1 may be applied to various image diagnoses. FIG. 23 is a diagram illustrating a fifth embodiment to which the optimization problem solving system is applied. The optimization problem solving system 1 of FIG. 23 includes an MRI device 500.

As illustrated in FIG. 23, the optimization problem solving system 1 can be used for compressed sensing by MRI or the like. Regarding the compressed sensing of MRI, the following literature is disclosed, and a detailed description thereof will be omitted.

· Sparse MRI:The application of compressed sensing for rapid MR imaging, Michael Lustig et al. <https://onlinelibrary.wiley.com/doi/epdf/10.1002/mrm.21391 >

The MRI device 500 includes a control computer 510, a radio wave transmission/reception device 520, and a detector unit 530, and is an image diagnosis device that images information inside a living body by using a nuclear magnetic resonance phenomenon. For example, the control computer 510 controls each component of the radio wave transmission/reception device 520 and the detector unit 530. For example, the radio wave transmission/reception device 520 is a radio wave transceiver that performs sensing. The detector unit 530 includes a magnet, a detection coil, a magnetic field gradient coil, and the like. The MRI device 500 may include a display unit (display device) such as a display or an input unit (input device) such as a mouse or a keyboard. Since the MRI device 500 is a so-called magnetic resonance imaging device (MRI), a detailed description thereof will be omitted.

Hereinafter, blocks implementing the L0 sparse modeling and the compression optimization in the entire MRI image will be described. First, in the optimization problem solving system 1, the compression optimization is used for observation thinning. In the optimization problem solving system 1 of FIG. 23, the control computer 510 of the MRI device 500 functions as the measurement controller indicated by the block B6 of the optimization problem solving system 1, and the radio wave transmission/reception device 520 of the MRI device 500 functions as the sensor indicated by the block B7. In the fifth embodiment, the sensor 50 does not have to be included in the optimization problem solving system.

The control computer 510 functioning as the measurement controller implements measurement while performing thinning according to information of an observation dimension selected in advance using the combinatorial optimization machine in such a way that a column vector of the observation matrix has as little correlation as possible.

In addition, any one of the plurality of Ising machines 10 is used as the combinatorial optimization machine, and as a selection criterion thereof, the accuracy is higher as compared with the high-speed performance and the real-time performance since this processing is offline processing.

On the other hand, in the processing after the block B7, data restoration of the compressed sensing using the L1 sparse modeling is usually used, but here, data restoration from the sparse solution of the L0 sparse modeling is performed.

This L0 sparse modeling is also implemented using the combinatorial optimization machine such as the Ising machine 10. A criterion at this time is different from the case of optimization of the reduced dimensionality, and the real-time property is emphasized since this processing is online processing. This is because it is expected that data is restored with a low delay each time information from the sensor is input one after another.

[3-5. Sixth Embodiment (Others)]

The application destination of the optimization problem solving system 1 is not limited to the above, and may be various applications using the sparse modeling. This point will be briefly described below.

For example, in the fourth embodiment, the obstacle detection by the in-vehicle radar is illustrated as an example, but LIDAR may be used instead of the radar. In addition to the obstacle detection, the radar may be used for weather condition observation, underground or water observation, and remote sensing from an aircraft (drone) or a satellite.

In addition, as an application using the radar, for example, super-resolution imaging of a black hole or the like is known in radio wave celestial body observation by a radio astronomy observatory, and sparse modeling used at this time may be implemented by the quantum annealing or the Ising machine.

As an application related to radar azimuth angle estimation, sparse modeling of sound source direction estimation is also conceivable.

Examples of the RFID and spread spectrum communication are sparse modeling utilization examples in communication, but in the field of communication, other applications in estimation of wireless multipath, effective band utilization by detection of use states of a plurality of bands, estimation of a network delay portion using network tomography, a wireless sensor net, and the like can be considered.

Furthermore, as an example similar to the example of MRI time reduction, reduction of power consumption of an imaging sensor and the like can be considered. In this case, processing of optimizing an element to be sensed in advance and restoring an actual sensing result by sparse modeling are considered.

Thus, the optimization problem solving system 1 of the present disclosure is applicable to various sparse modeling applications already known.

As described above, the optimization problem solving system 1 converts the L1 sparse modeling used in various applications such as the compressed sensing and super-resolution into the L0 sparse modeling that is more ideal sparse modeling. When replacing the L1 sparse modeling with the L0 sparse modeling, the optimization problem solving system 1 is connected to a combinatorial-optimization-dedicated computer such as the Ising machine, and performs formulation to convert the L0 sparse modeling problem into quadratic combinatorial optimization in order to establish connection to them.

[4. Other Configuration Examples, etc.]

The processing according to the above-described embodiments and modifications may be performed in various different modes (modifications) other than the above-described embodiments and modifications.

[4-1. Other Configuration Examples]

In the above example, the case where the optimization problem solving device 100 and the Ising machine 10 are separate bodies has been described, but the optimization problem solving device 100 and the Ising machine 10 may be integrated. For example, in a case where the Ising machine 10 is implemented by a digital circuit without using superconduction, the Ising machine 10 may be arranged on the edge side. For example, in a case where calculation using the Ising model is performed on the edge side, the optimization problem solving device 100 and the Ising machine 10 may be integrated.

[4-2. Method of Generating Information Used for Program and Processing of Parameter and the like]

A method of generating the above-described optimization problem solving processing, parameters, and the like may be provided. Furthermore, a method of generating a program used when the above-described Ising machine 10 performs calculation may be provided.

[4-3. Others]

Further, among the respective processing described in the above-described embodiment, all or some of the processing described as being automatically performed can be manually performed. Alternatively, all or some of the processing described as being manually performed can be automatically performed by a known method. In addition, the processing procedures, specific names, information including various data and parameters illustrated in the specification and drawings can be arbitrarily changed unless otherwise specified. For example, various pieces of information illustrated in the drawings are not limited to those illustrated in the drawings.

Further, each illustrated component of each device is functionally conceptual, and does not necessarily have to be configured physically as illustrated in the drawings. That is, the specific modes of distribution/integration of the respective devices are not limited to those illustrated in the drawings. All or some of the devices can be functionally or physically distributed/integrated in any arbitrary unit, depending on various loads or the status of use.

In addition, the above-described embodiment and modified example can be appropriately combined as long as the processing contents do not contradict each other.

Further, the effects in each embodiment described in the present specification are merely examples. The effects of the present disclosure are not limited thereto, and other effects may be obtained.

[5. Effects According to Present Disclosure]

As described above, the optimization problem solving method according to the present disclosure includes: inputting the first data from the sensor (the sensor 50 in the embodiment); generating an objective function for performing sparse modeling on the first data; generating a coefficient matrix related to a variable to be optimized in the objective function; transmitting the coefficient matrix to the first Ising machine that performs combinatorial optimization calculation; and generating an optimum solution of sparse modeling based on the second data received from the first Ising machine (the Ising machine 10 in the embodiment).

As described above, in the optimization problem solving method, a coefficient matrix corresponding to an objective function derived by sparse modeling is generated for the input of the first data, the coefficient matrix is transmitted to the Ising machine, and an optimum solution is generated based on the second data received from the Ising machine. As a result, in the optimization problem solving method, it is possible to appropriately generate a solution of an optimization problem by using the Ising machine for data from the sensor. That is, a computer that executes the optimization problem solving method can appropriately generate a solution of an optimization problem by using the Ising machine for data from the sensor.

The sparse modeling is also the L0 sparse modeling. As described above, in the optimization problem solving method, it is possible to generate an optimum solution by the L0 sparse modeling, and to appropriately generate a solution of an optimization problem by using the Ising machine for data from the sensor.

Further, the variable to be optimized is a binary variable that distinguishes between a non-zero component and a zero component for each component of a sparse variable that models the first data. As described above, in the optimization problem solving method, it is possible to generate, for each component of the sparse variable that models the first data, a solution that optimizes the binary variable that distinguishes between the non-zero component and the zero component, and to appropriately generate a solution of an optimization problem by using the Ising machine for data from the sensor.

Furthermore, the variable to be optimized is each bit variable obtained by quantizing each component of the sparse variable that models the first data. In this manner, it is possible to generate a solution for optimizing each bit variable obtained by quantization for each component of the sparse variable that models the first data, and it is possible to appropriately generate a solution of an optimization problem by using the Ising machine for data from the sensor.

In addition, a coefficient matrix corresponding to the objective function converted into the QUBO form is generated. As described above, in the optimization problem solving method, the coefficient matrix corresponding to the objective function converted into the QUBO form is transmitted to the Ising machine, so that a solution of an optimization problem can be appropriately generated by using the Ising machine for data from the sensor.

Furthermore, the coefficient matrix is an array including coefficients related to a first-order or higher-order term of the variable to be optimized extracted from the objective function. As a result, in the optimization problem solving method, it is possible to appropriately generate a solution of an optimization problem by using the Ising machine for data from the sensor by transmitting the coefficient matrix, which is an array including the coefficients related to the first-order or higher-order term of the variable to be optimized extracted from the objective function, to the Ising machine.

The objective function is a function corresponding to the first data. As described above, in the optimization problem solving method, it is possible to appropriately generate a solution of an optimization problem by using the Ising machine for data from the sensor by generating an optimum solution using the objective function corresponding to the first data.

The optimum solution is a solution corresponding to the first data. As described above, in the optimization problem solving method, it is possible to appropriately generate a solution of an optimization problem by using the Ising machine for data from the sensor by generating a solution corresponding to the first data.

The optimum solution is calculated by calculating a value of the non-zero component using the second data. As described above, in the optimization problem solving method, it is possible to appropriately generate a solution of an optimization problem by using the Ising machine for data from the sensor by calculating the value of the non-zero component using the second data to calculate the optimum solution.

In addition, the first Ising machine is a quantum computer (the Ising machine 10a in the embodiment) or a quantum-inspired computer (the Ising machine 10b in the embodiment). As described above, in the optimization problem solving method, a coefficient matrix is transmitted to the quantum computer or the quantum-inspired computer, and an optimum solution is generated based on the second data received from the quantum computer or the quantum-inspired computer, so that it is possible to appropriately generate a solution of an optimization problem by using the Ising machine for data from the sensor.

Furthermore, in the optimization problem solving method according to the present disclosure, dimension selection of the first data by the measurement controller is further performed. As a result, in the optimization problem solving method, it is possible to generate an optimum solution for data for which dimension selection has been performed, and to appropriately generate a solution of an optimization problem by using the Ising machine for data from the sensor.

Furthermore, in the optimization problem solving method according to the present disclosure, the dimension selection uses the sparse observation model. As a result, in the optimization problem solving method, it is possible to generate an optimum solution for data for which dimension selection has been performed by using the sparse observation model, and to appropriately generate a solution of an optimization problem by using the Ising machine for data from the sensor.

In addition, the sparse observation model is generated by the second Ising machine (the Ising machine 10 in the embodiment) that performs the observation dimension selection modeling. As described above, in the optimization problem solving method, it is possible to generate an optimum solution for data for which dimension selection has been performed by using the sparse observation model generated by the Ising machine, and to appropriately generate a solution of an optimization problem by using the Ising machine for data from the sensor.

Furthermore, in the optimization problem solving method according to the present disclosure, the user selects the first Ising machine by a user interface (the input unit 140 and the display unit 150 of the optimization problem solving device 100 in the embodiment). As a result, in the optimization problem solving method, it is possible to appropriately generate a solution of an optimization problem by using the Ising machine desired by the user.

Furthermore, in the optimization problem solving method according to the present disclosure, the user interface presents a plurality of selection candidates to the user, and transmits the coefficient matrix to the first Ising machine corresponding to a selection candidate selected by the user among the plurality of selection candidates. As a result, in the optimization problem solving method, it is possible to appropriately generate a solution of an optimization problem by using the Ising machine desired by the user by performing processing using the Ising machine selected from a plurality of candidates by the user.

Furthermore, in the optimization problem solving method according to the present disclosure, the user interface presents detailed information of the selection candidate designated by the user among the plurality of selection candidates. As a result, in the optimization problem solving method, the user can check the details of each candidate and select the Ising machine to be used, so that the satisfaction of the user can be increased.

Furthermore, in the optimization problem solving method according to the present disclosure, the detailed information includes at least one of a usage fee, a specification, or a recommended application of the first Ising machine corresponding to the selection candidate. As a result, in the optimization problem solving method, the user can select the Ising machine to be used by checking the usage fee, the specification, the recommended use, and the like of each candidate, and thus, it is possible to increase the satisfaction of the user.

As described above, the optimization problem solving device (the optimization problem solving device 100 in the embodiment) according to the present disclosure includes: the sensor input unit (the reception unit 131 in the embodiment) that inputs the first data from the sensor; the first generation unit (the first generation unit 132 in the embodiment) that generates an objective function for performing sparse modeling on the first data; the second generation unit (the second generation unit 133 in the embodiment) that generates a coefficient matrix related to a variable to be optimized in the objective function; the transmission unit (the transmission unit 134 in the embodiment) that transmits the coefficient matrix to the first Ising machine that performs combinatorial optimization calculation; and the third generation unit (the third generation unit 135 in the embodiment) that generates an optimum solution of sparse modeling based on the second data received from the first Ising machine.

As described above, the optimization problem solving device generates a coefficient matrix corresponding to an objective function derived by sparse modeling for the input of the first data, transmits the coefficient matrix to the Ising machine, and generates an optimum solution based on the second data received from the Ising machine. As a result, in the optimization problem solving method, it is possible to appropriately generate a solution of an optimization problem by using the Ising machine for data from the sensor.

[6. Hardware Configuration]

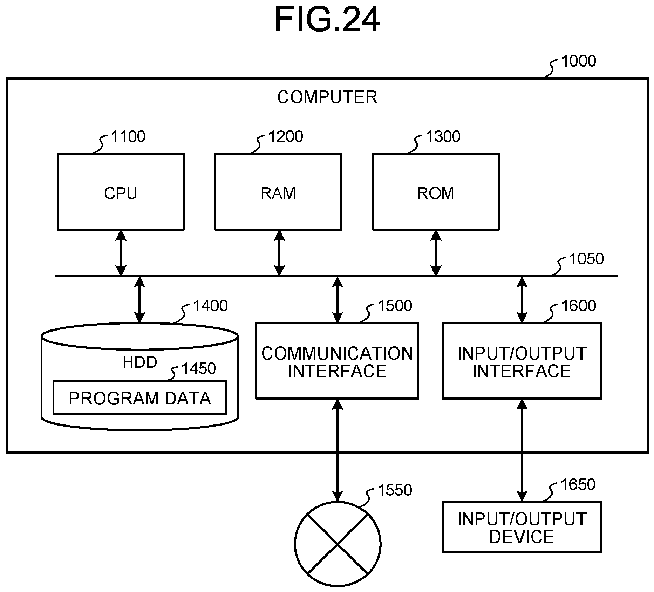

An information device such as the optimization problem solving device 100 according to each embodiment or modified example described above is implemented by, for example, a computer 1000 having a configuration as illustrated in FIG. 24. FIG. 24 is a hardware configuration diagram illustrating an example of the computer that implements the functions of the optimization problem solving device. Hereinafter, the optimization problem solving device 100 will be described as an example. The computer 1000 includes a CPU 1100, a RAM 1200, a read only memory (ROM) 1300, a hard disk drive (HDD) 1400, a communication interface 1500, and an input/output interface 1600. Each component of the computer 1000 is connected by a bus 1050.

The CPU 1100 is operated based on a program stored in the ROM 1300 or the HDD 1400, and controls each component. For example, the CPU 1100 loads the program stored in the ROM 1300 or the HDD 1400 on the RAM 1200 and performs processing corresponding to various programs.

The ROM 1300 stores a boot program such as a basic input output system (BIOS) executed by the CPU 1100 when the computer 1000 is started, a program that depends on the hardware of the computer 1000, or the like.

The HDD 1400 is a recording medium that is readable by the computer, in which a program executed by the CPU 1100, data used by the program, or the like, is non-temporarily recorded. Specifically, the HDD 1400 is a recording medium in which the information processing program such as an optimization problem solving processing program according to the present disclosure, which is an example of program data 1450, is recorded.

The communication interface 1500 is an interface for the computer 1000 to be connected to an external network 1550 (for example, the Internet). For example, the CPU 1100 receives data from another equipment or transmits data generated by the CPU 1100 to another equipment via the communication interface 1500.

The input/output interface 1600 is an interface for connecting an input/output device 1650 and the computer 1000 to each other. For example, the CPU 1100 receives data from an input device such as a keyboard or mouse via the input/output interface 1600. Further, the CPU 1100 transmits data to an output device such as a display, a speaker, or a printer via the input/output interface 1600. Further, the input/output interface 1600 may function as a medium interface for reading a program or the like recorded in a predetermined recording medium. Examples of the medium include an optical recording medium such as a digital versatile disc (DVD) or a phase change rewritable disk (PD), a magneto-optical recording medium such as a magneto-optical disk (MO), a tape medium, a magnetic recording medium, and a semiconductor memory.

For example, in a case where the computer 1000 functions as the optimization problem solving device 100, the CPU 1100 of the computer 1000 implements the functions of the control unit 130 and the like by executing the information processing program such as the optimization problem solving processing program loaded on the RAM 1200. In addition, the HDD 1400 stores the information processing program such as the optimization problem solving processing program according to the present disclosure and data in the storage unit 120. Note that the CPU 1100 reads the program data 1450 from the HDD 1400 and executes the program data 1450, but as another example, these programs may be acquired from another device via the external network 1550.

Note that the present technology can also have the following configurations.

(1) An optimization problem solving method comprising:

inputting first data from a sensor;
generating an objective function for performing sparse modeling on the first data;
generating a coefficient matrix related to a variable to be optimized in the objective function;
transmitting the coefficient matrix to a first Ising machine that performs combinatorial optimization calculation; and
generating an optimum solution of sparse modeling based on second data received from the first Ising machine.

(2) The optimization problem solving method according to (1), wherein the sparse modeling is L0 sparse modeling.
(3) The optimization problem solving method according to (1) or (2), wherein the variable to be optimized is a binary variable that distinguishes between a non-zero component and a zero component for each component of a sparse variable that models the first data.

(4) The optimization problem solving method according to any one of (1) to (3), wherein the variable to be optimized is each bit variable obtained by quantizing each component of a sparse variable that models the first data.

(5) The optimization problem solving method according to any one of (1) to (4), wherein the coefficient matrix corresponding to the objective function converted into a quadratic unconstrained binary optimization (QUBO) form is generated.

(6) The optimization problem solving method according to (5), wherein the coefficient matrix is an array including coefficients related to a first-order or higher-order term of the variable to be optimized extracted from the objective function.

(7) The optimization problem solving method according to any one of (1) to (6), wherein the objective function is a function corresponding to the first data.

(8) The optimization problem solving method according to any one of (1) to (7), wherein the optimum solution is a solution corresponding to the first data.

(9) The optimization problem solving method according to (8), wherein the optimum solution is calculated by calculating a value of the non-zero component using the second data.

(10) The optimization problem solving method according to any one of (1) to (9), wherein the first Ising machine is a quantum computer or a quantum-inspired computer.

(11) The optimization problem solving method according to any one of (1) to (10), further comprising performing dimension selection of the first data by a measurement controller.

(12) The optimization problem solving method according to (11), wherein the dimension selection uses a sparse observation model.

(13) The optimization problem solving method according to (12), wherein the sparse observation model is generated by a second Ising machine that performs observation dimension selection modeling.

(14) The optimization problem solving method according to any one of (1) to (13), further comprising selecting, by a user, the first Ising machine by using a user interface.

(15) The optimization problem solving method according to (14), wherein the user interface presents a plurality of selection candidates to the user, and transmits the coefficient matrix to the first Ising machine corresponding to a selection candidate selected by the user among the plurality of selection candidates.

(16) The optimization problem solving method according to (15), wherein the user interface presents detailed information of the selection candidate designated by the user among the plurality of selection candidates.

(17) The optimization problem solving method according to (16), wherein the detailed information includes at least one of a usage fee, a specification, or a recommended application of the first Ising machine corresponding to the selection candidate.

(18) An optimization problem solving device comprising:

a sensor input unit that inputs first data from a sensor;
a first generation unit that generates an objective function for performing sparse modeling on the first data;
a second generation unit that generates a coefficient matrix related to a variable to be optimized in the objective function;
a transmission unit that transmits the coefficient matrix to a first Ising machine that performs combinatorial optimization calculation; and
a third generation unit that generates an optimum solution of sparse modeling based on second data received from the first Ising machine.

Reference Signs List

| 1 | OPTIMIZATION PROBLEM SOLVING SYSTEM |
|---|---|
| 100 | OPTIMIZATION PROBLEM SOLVING DEVICE |
| 110 | COMMUNICATION UNIT |
| 120 | STORAGE UNIT |
| 121 | DATA STORAGE UNIT |
| 122 | FUNCTION INFORMATION STORAGE UNIT |
| 130 | CONTROL UNIT |
| 131 | RECEPTION UNIT |
| 132 | FIRST GENERATION UNIT |
| 133 | SECOND GENERATION UNIT |

134    TRANSMISSION UNIT
135    THIRD GENERATION UNIT
140    INPUT UNIT
150    DISPLAY UNIT
10    ISING MACHINE
11    COMMUNICATION UNIT
12    STORAGE UNIT
13    QUANTUM DEVICE UNIT
14    CONTROL UNIT
141    ACQUISITION UNIT
142    CALCULATION UNIT
143    TRANSMISSION UNIT
50    SENSOR

**Claims**

1.    An optimization problem solving method comprising:

inputting first data from a sensor;
generating an objective function for performing sparse modeling on the first data;
generating a coefficient matrix related to a variable to be optimized in the objective function;
transmitting the coefficient matrix to a first Ising machine that performs combinatorial optimization calculation; and
generating an optimum solution of sparse modeling based on second data received from the first Ising machine.

2.    The optimization problem solving method according to claim 1, wherein the sparse modeling is L0 sparse modeling.

3.    The optimization problem solving method according to claim 1, wherein the variable to be optimized is a binary variable that distinguishes between a non-zero component and a zero component for each component of a sparse variable that models the first data.

4.    The optimization problem solving method according to claim 1, wherein the variable to be optimized is each bit variable obtained by quantizing each component of a sparse variable that models the first data.

5.    The optimization problem solving method according to claim 1, wherein the coefficient matrix corresponding to the objective function converted into a quadratic unconstrained binary optimization (QUBO) form is generated.

6.    The optimization problem solving method according to claim 5, wherein the coefficient matrix is an array including coefficients related to a first-order or higher-order term of the variable to be optimized extracted from the objective function.

7.    The optimization problem solving method according to claim 1, wherein the objective function is a function corresponding to the first data.

8.    The optimization problem solving method according to claim 1, wherein the optimum solution is a solution corresponding to the first data.

9.    The optimization problem solving method according to claim 8, wherein the optimum solution is calculated by calculating a value of the non-zero component using the second data.

10.    The optimization problem solving method according to claim 1, wherein the first Ising machine is a quantum computer or a quantum-inspired computer.

11.    The optimization problem solving method according to claim 1, further comprising performing dimension selection of the first data by a measurement controller.

12.    The optimization problem solving method according to claim 11, wherein the dimension selection uses a sparse observation model.

13. The optimization problem solving method according to claim 12, wherein the sparse observation model is generated by a second Ising machine that performs observation dimension selection modeling.

14. The optimization problem solving method according to claim 1, further comprising selecting, by a user, the first Ising machine by using a user interface.

15. The optimization problem solving method according to claim 14, wherein the user interface presents a plurality of selection candidates to the user, and transmits the coefficient matrix to the first Ising machine corresponding to a selection candidate selected by the user among the plurality of selection candidates.

16. The optimization problem solving method according to claim 15, wherein the user interface presents detailed information of the selection candidate designated by the user among the plurality of selection candidates.

17. The optimization problem solving method according to claim 16, wherein the detailed information includes at least one of a usage fee, a specification, or a recommended application of the first Ising machine corresponding to the selection candidate.

18. An optimization problem solving device comprising:

a sensor input unit that inputs first data from a sensor;
a first generation unit that generates an objective function for performing sparse modeling on the first data;
a second generation unit that generates a coefficient matrix related to a variable to be optimized in the objective function;
a transmission unit that transmits the coefficient matrix to a first Ising machine that performs combinatorial optimization calculation; and
a third generation unit that generates an optimum solution of sparse modeling based on second data received from the first Ising machine.

# FIG.1

# FIG.2

# FIG.3

START

↓

PRESENT LIST OF COMBINATORIAL
OPTIMIZATION TASKS  ～S1

↓

PRESENT USABLE COMBINATORIAL
OPTIMIZATION METHOD  ～S2

↓

PRESENT CHARACTERISTIC OF
SELECTED OPTIMIZATION METHOD  ～S3

↓

CHECK WHETHER OR NOT SELECTED
OPTIMIZATION METHOD IS FAVORABLE  ～S4

↓

PERFORM OPTIMIZATION BY SELECTED
OPTIMIZATION METHOD  ～S5

↓

END

# FIG.4

CT1

SELECT COMBINATORIAL
OPTIMIZATION TASK

☐ MEASUREMENT SPARSIFICATION

■ SPARSE MODELING

COMBINATORIAL OPTIMIZATION
METHOD

☐ QUANTUM ANNEALING (D)

■ QUANTUM-INSPIRED COMPUTER (H)

■ QUANTUM-INSPIRED COMPUTER (F)

■ QUANTUM-INSPIRED COMPUTER (T)

■ SIMULATED ANNEALING

■ INTEGER PROGRAMMING SOLVER

CT2

QUANTUM ANNEALING (COMPANY D)
· FEE: X $ PER TIME
· DELAY TIME: xx SECONDS
· CALCULATION TIME: xx SECONDS
· MAXIMUM VARIABLE NUMBER:
  UP TO 10,000
· RECOMMENDED COUPLING NUMBER 6
  OR LESS
· REMARKS: RECOMMENDED FOR HIGH-
  PRECISION PRELIMINARY CALCULATION

CT3

DO YOU WANT TO
APPROVE THIS OPTION?
Yes  No

# FIG.5

# FIG.6

THERMAL
FLUCTUATION

ENERGY
FUNCTION

QUANTUM
FLUCTUATION
(TUNNELING EFFECT)

# FIG.7

$x$ $=$ $U$ $Z$

OBSER-
VATION D11

N

PRIMARY
CONVERSION
N<M

D12

D13

M

# FIG.8

$$BF^TFB= \begin{pmatrix} & & \cdots & & 0 & & \\ & & & & 0 & & \\ \vdots & & \vdots & & 0 & & \vdots \\ 0, & 0, & 0, & & 0, & 0, & 0, \\ & & & & 0 & & \\ & & \cdots & & 0 & & \end{pmatrix} \longrightarrow$$

D21

D22

$$I-B= \begin{pmatrix} 0 & & \cdots & & \\ & 0 & & & \\ \vdots & & 0 & & \vdots \\ & & & \mathbf{1} & \\ & & \cdots & & 0 \end{pmatrix}$$

D23

# FIG.9

```
                    START
                      |
                      v                        ~S101
  INPUT OBSERVATION DATA AND
  OBSERVATION MATRIX
                      |
                      v                        ~S102
  ACQUIRE COEFFICIENT MATRIX OF
  FORMULATION OF COMBINATION OF
  NON-ZERO COMPONENTS OF SOLUTION
                      |
                      v                        ~S103
  TRANSMIT COEFFICIENT MATRIX TO
  COMBINATORIAL OPTIMIZATION MACHINE
                      |
                      v                        ~S104
  RECEIVE OPTIMIZED SOLUTION FROM
  COMBINATORIAL OPTIMIZATION MACHINE
                      |
                      v                        ~S105
  CALCULATE VALUE OF NON-ZERO
  COMPONENT OF SOLUTION
                      |
                      v                        ~S106
  RESTORE OR SYNTHESIZE DATA
                      |
                      v
                    END
```

# FIG.10

| | PG1 |
|---|---|
| - U = load_observation_matrix(file) | #READING FILE |
| - s = Spin(N) | #VARIABLE SUPPORTED BY LIBRARY |
| - machine = IsingMachine() | #MACHINE SUPPORTED BY LIBRARY |
| - loss = l0_sparse_modeling(U, x, s, lambda=xxx) | #LOSS CALCULATION OF I0 SPARSE MODELING |
| - h, J = get_ising_params(loss) | #FUNCTION SUPPORTED BY LIBRARY |
| - s_optimum = ising_machine.solve_ising(h, J) | #FUNCTION SUPPORTED BY LIBRARY |
| - z = l0_sparse_solution(U, x, s_optimum) | #CALCULATING SOLUTATION OF L0 SPARSE MODELING |

# FIG.11

(FUNCTION NAME l0_sparse_modeling(U, x, s, lambda))                                                        ⌠PG2

| | |
|---|---|
| - B = diag(b = (1-s)/2) | #CONVERTING SPIN INTO BINARY VARIABLE |
| - loss = trace(B) | #NUMBER OF NON-ZERO COMPONENTS |
| - Fx = matmul(B, matmul(U.t, x)) | #EXTRACTION OF COMPONENT FROM DATA |
| - D = UnitMatrix - matmul(U.t, U) | #DEVIATION OF OBSERVATION MATRIX FROM UNIT MATRIX |
| - penalty = matmul(D, matmul(Fx, Fx.t)) | #PENALTY TERM |
| - loss += lamda * trace(penalty) | #ADDING PENALTY TO LOSS |

# FIG.12

(FUNCTION NAME l0_sparse_solution(U, x, s_optimum))                                                        ⌠PG3

| | |
|---|---|
| - Fs = U[s_optimum] | #GENERATING SUBMATRIX OF OBSERVATION MATRIX |
| - FstFs = matmul(Fs.t(), Fs) | #GENERATING SQUARE MATRIX |
| - Ws = matmul(FstFs.i(), Fs.t()) | #PSEUDO INVERSE MATRIX |
| - zs = matmul(Ws, x) | #CALCULATING NON-ZERO COMPONENT OF SPARSE SOLUTION |
| - z = ZeroVector() | #GENERATING ZERO COMPONENT OF SPARSE SOLUTION |
| - z[s_optimum] = zs | #COMBINATION OF ZERO COMPONENTS AND NON-ZERO COMPONENTS OF SPARSE SOLUTION |

# FIG.13

OPTIMIZATION PROBLEM SOLVING DEVICE — 100

COMMUNICATION UNIT — 110

CONTROL UNIT — 130

RECEPTION UNIT — 131

FIRST GEN-ERATION UNIT — 132

SECOND GEN-ERATION UNIT — 133

TRANSMISSION UNIT — 134

THIRD GEN-ERATION UNIT — 135

STORAGE UNIT — 120

DATA STORAGE UNIT — 121

FUNCTION INFORMATION STORAGE UNIT — 122

INPUT UNIT — 140

DISPLAY UNIT — 150

# FIG.14

# FIG.15

```
            ( START )
                │
                ▼
```
~S201

ACQUIRE NON-SPARSE OBSERVATION MATRIX

~S202

ACQUIRE COMBINATORIAL OPTIMIZATION
PARAMETER OF SELECTION OF OBSERVATION

~S203

TRANSMIT OPTIMIZATION PARAMETER TO
COMBINATORIAL OPTIMIZATION MACHINE

~S204

RECEIVE OPTIMIZATION RESULT FROM
COMBINATORIAL OPTIMIZATION MACHINE

~S205

GENERATE OBSERVATION SELECTION/
SYNTHESIS MATRIX

~S206

STORE OBSERVATION SELECTION/
SYNTHESIS MATRIX

```
                │
                ▼
            ( END )
```

# FIG.16

PG21

| | |
|---|---|
| - A = load_observation_matrix(file) | #READING FILE |
| - s = Spin(N) | #VARIABLE SUPPORTED BY LIBRARY |
| - machine = IsingMachine() | #MACHINE SUPPORTED BY LIBRARY |
| - loss = sparse_observation (A, s, lambda=xxx) | #LOSS CALCULATION |
| - h, J = get_ising_params(loss) | #FUNCTION SUPPORTED BY LIBRARY |
| - s_optimum = ising_machine.solve_ising(h, J) | #FUNCTION SUPPORTED BY LIBRARY |
| - C = dimension_selection(A, s_optimum) | #DIMENSION SELECTION MATRIX |

# FIG.17

(FUNCTION NAME sparse_observation(A, s, lambda))                                    ⌠PG22

| | |
|---|---|
| - B = diag(b = (1-s)/2) | #CONVERTING SPIN INTO BINARY VARIABLE |
| - loss = Fnorm(B) | #NUMBER OF DIMENSIONS USED AND FROBENIUS NORM |
| - penalty = matmul(A.t(), matmul(B, A)) | #SPARSE OBSERVATION |
| - penalty = UnitMatrix(M) - penalty | #DEVIATION FROM UNIT MATRIX |
| - loss += lambda * Fnorm(penalty) | #PENALTY TERM |

# FIG.18

(FUNCTION NAME dimension_selection(A, s_optimum))                                    ⌠PG23

| | |
|---|---|
| - As = A[s_optimum] | |
| - AsAst = matmul(As.t(), As) | |
| - Pi, D, P = symmeterize(AsAst) | #DIAGONALIZATION (P_inverse, D DIAGONAL MATRIX, P ORTHOGONAL MATRIX) |
| - Cs = sqrt (1/D) | #BEING DESIRED TO CALCULATE SQUARE ROOT OF INVERSE MATRIX |
| - Cs = matmul (Pi, matmul(Cs, P)) | #USING DIAGONALIZATION MATRIX |
| - C = ZeroMatrix() | |
| - C[s_optimum] = Cs | #ASSIGNED TO SELECTED DIMENSION |

# FIG.19

FIG.20

# FIG.21

EP 4 181 034 A1

# FIG.22

UC22

TARGET #1

TARGET #2

TARGET #3

INCOMING WAVE #1

INCOMING WAVE #3

INCOMING WAVE #2

GRID

GRID

-88

-89

-90

88

89

90

ARRAY RADAR

EP 4 181 034 A1

FIG.23

EP 4 181 034 A1

# FIG.24

## INTERNATIONAL SEARCH REPORT

| | International application No. |
|---|---|
| | PCT/JP2021/024899 |

**A. CLASSIFICATION OF SUBJECT MATTER**
G06N 99/00(2019.01)i
FI: G06N99/00 180

According to International Patent Classification (IPC) or to both national classification and IPC

**B. FIELDS SEARCHED**

Minimum documentation searched (classification system followed by classification symbols)
G06N99/00

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | AYANZADEH, R. et al., "Quantum Annealing Based Binary Compressive Sensing with Matrix Uncertainty", arXive.org [online], 01 January 2019, arXiv:1901.00088, Retrieved from the Internet: <URL: https://arxiv.org/abs/1901.00088>, [Retrieved on 14 September 2021], in particular, pp. 3-10 | 1–10, 18 |
| Y | in particular, pp. 3-10 | 11–17 |
| Y | BABACAN, S. D., et al., "Sparse Bayesian Methods for Low-Rank Matrix Estimation", IEEE Transactions on Signal Processing, 03 May 2012, vol. 60, no. 8, pp. 3964-3977, Retrieved from the Internet: <URL: https://ieeexplore.ieee.org/document/6194350>, [Retrieved on 14 September 2021], DOI:10.1109/TSP.2012.2197748, in particular, sections I-III | 11–13 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 September 2021 (14.09.2021) | 21 September 2021 (21.09.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | CASTELVECCHI, D., "IBM's quantum cloud computer goes commercial", Nature, vol. 543, 09 March 2017, p. 159, Retrieved from the Internet: <URL: https://nature.com/articles/nature.2017.21585>, [Retrieved on 14 September 2021], DOI: 10.1038/nature.2017.21585, in particular, left column, right column, section "Era of the quantum cloud" | 14-17 |
| Y | HU, J. et al., 私の研究開発ツール－－第82回－－ゼロから始めるクラウドコンピューティング(1) ～Microsoft Azure 入門編～, 映像情報メディア学会誌,  01 April 2015, vol. 69, no. 4, pp. 336-340, ISSN: 1342-6907, in particular, section 5.1, ("My Recommendations on Research and Development Tools (82): Getting Started with Cloud Computing (1); Introduction of Microsoft Azure", The Journal of The Institute of Image Information and Television Engineers) | 14-17 |

Form PCT/ISA/210 (continuation of second sheet) (January 2015)

**EP 4 181 034 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019046038 A